(19) Europäisches Patentamt / European Patent Office / Office européen des brevets

(11) **EP 4 232 264 B1**

(12) **EUROPEAN PATENT SPECIFICATION**

(45) Date of publication and mention of the grant of the patent:
**17.09.2025 Bulletin 2025/38**

(21) Application number: **21806410.3**

(22) Date of filing: **21.10.2021**

(51) International Patent Classification (IPC):
**B29C 64/188** (2017.01)    **B29C 44/56** (2006.01)
**B29C 71/00** (2006.01)    **B29C 71/04** (2006.01)
**B33Y 40/20** (2020.01)

(52) Cooperative Patent Classification (CPC):
**B29C 64/188; B29C 35/08; B29C 71/04; B33Y 40/20;** B29C 64/386; B29C 71/02; B33Y 50/00

(86) International application number:
**PCT/IL2021/051250**

(87) International publication number:
**WO 2022/085005 (28.04.2022 Gazette 2022/17)**

## (54) METHOD AND SYSTEM FOR TREATING AN ADDITIVE MANUFACTURED OBJECT

VERFAHREN UND SYSTEM ZUR BEHANDLUNG EINES GENERATIV GEFERTIGTEN OBJEKTS

PROCÉDÉ ET SYSTÈME DE TRAITEMENT D'UN OBJET RÉALISÉ PAR FABRICATION ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2020 US 202063094712 P**

(43) Date of publication of application:
**30.08.2023 Bulletin 2023/35**

(73) Proprietor: **Stratasys Ltd.**
**7612401 Rehovot (IL)**

(72) Inventors:
• **KUNO, Lev**
**9987500 Tzur-Hadassah (IL)**
• **POKRASS, Mariana**
**7608620 Rehovot (IL)**
• **RAVICH, Diana**
**4270128 Natania (IL)**
• **SHELEF, Gil**
**7985600 Doar-Na Lachish Darom (IL)**

(74) Representative: **Kramer, Dani**
**Mathys & Squire**
**The Shard**
**32 London Bridge Street**
**London SE1 9SG (GB)**

(56) References cited:
**WO-A1-2020/157598    WO-A1-2021/255150**
**WO-A2-2014/007399**

**Description**

RELATED APPLICATION

This application claims the benefit of priority of U.S. Provisional Patent Application No. 63/094,712 filed on October 21, 2020.

This application is also related to co-filed, PCT Application entitled "ADDITIVE MANUFACTURING OF THREE-DIMENSIONAL OBJECTS CONTAINING A TRANSPARENT MATERIAL" (Attorney Docket No. 89343), which claims the benefit of priority of U.S. Provisional Patent Application No. 63/094,801 filed on October 21, 2020.

FIELD AND BACKGROUND OF THE INVENTION

The present invention relates to method and system for treating an object manufactured by additive manufacturing.

Additive manufacturing (AM) is a technology enabling fabrication of shaped structures directly from computer data via additive formation steps. The basic operation of any AM system consists of slicing a three-dimensional computer model into thin cross sections, translating the result into two-dimensional position data and feeding the data to control equipment which fabricates a three-dimensional structure in a layerwise manner.

Additive manufacturing entails many different approaches to the method of fabrication, including three-dimensional (3D) printing such as 3D inkjet printing, electron beam melting, stereolithography, selective laser sintering, laminated object manufacturing, fused deposition modeling and others.

Some 3D printing processes, for example, 3D inkjet printing, are being performed by a layer by layer inkjet deposition of building materials. Thus, a building material is dispensed from a dispensing head having a set of nozzles to deposit layers on a supporting structure. Depending on the building material, the layers may then be cured or solidified using a suitable device.

Various three-dimensional printing techniques exist and are disclosed in, *e.g.,* U.S. Patent Nos. 6,259,979, 6,569,373, 6,658,314, 6,850,334, 6,863,859, 7,183,335, 7,209,797, 7,225,045, 7,300,619, 7,500,846, 9,031,680 and 9,227,365, U.S. Published Application No. 20060054039, and International publication No. WO2016/009426, all by the Assignee. WO2014/007399 A2 also discloses a method and a system for treating an object fabricated from a modelling material by an additive manufacturing system.

Some three-dimensional printing techniques employ ultraviolet (UV) radiation for curing the dispensed building material. In these techniques, the building material composition typically includes aside from a reactive component, a photoinitiator. For example, some three-dimensional printing techniques employ phosphine oxide-type photoinitiators, as described hereinbelow in further detail. Commonly used photoinitiators include (2,4,6-trimethylbenzoyl)-diphenylphosphine oxide [(TPO) - CAS 75980-60-8] and bis-(2,4,6-trimethylbenzoyl)-phenylphosphine oxide [(BAPO e.g. Irgacure 819) - CAS 162881-26-7)].

SUMMARY OF THE INVENTION

According to an aspect of some embodiments of the present invention there is provided a method of treating an object fabricated from a modeling material by additive manufacturing as stated in the appended claim 1.

According to some embodiments of the invention the object is fabricated from a plurality of modeling material formulations, wherein the HDT is a lowest HDT among a respective plurality of HDT values of the plurality of modeling material formulations.

According to some embodiments of the invention a duration of the exposure is selected such as to reduce a yellowness index of the modeling material by at least 5 units on a CIE XYZ color space.

According to some embodiments of the invention the peak wavelength and temperature are selected such that for at least one colored region of the object a color difference between a color of the colored region after the exposure and a color of the colored region before the exposure is less than 2 $\Delta E^*$ units.

According to some embodiments of the invention the exposure is within a treatment chamber, having a plurality of light sources for generating the light.

According to some embodiments of the invention the modeling material is obtained upon hardening a photocurable modeling material formulation that comprises a phosphine oxide-type photoinitiator.

According to some embodiments of the invention the photoinitiator is a mono-acylated (MAPO) or bis-acylated phosphine oxide-type (BAPO) photoinitiator.

According to some embodiments of the invention the phosphine oxide-type photoinitiator phosphine is capable of free-radical initiation when irradiated at wavelength ranges of from about 380 nm to about 450 nm.

Photoinitiator is selected from (2,4,6-trimethylbenzoyl)-diphenylphosphine oxide (TPO), bis(2,4,6-trimethylbenzoyl)phenyl phosphine oxide (marketed as IRGACURE® 819), bis(2,6-dimethoxybenzoyl)-(2,4,4-trimethylpentyl) phosphine oxide (marketed as CGI 403), a 25:75 mixture, by weight, of bis(2,6-dimethoxybenzoyl)-2,4,4-trimethylpentyl phosphine oxide and 2-hydroxy-2-methyl-1-phenylpropan-1-one (marketed as IRGACURE® 1700), a 1:1 mixture, by weight, of bis(2,4,6-trimethylbenzoyl)phenyl phosphine oxide and 2-hydroxy-2-methyl-1-phenylpropane-1-one (marketed as DAROCUR® 4265), and ethyl 2,4,6-trimethylbenzylphenyl phosphinate (LUCIRIN LR8893X).

According to some embodiments of the invention the photoinitiator is or comprises bis(2,4,6-trimethylbenzoyl) phenyl phosphine oxide.

According to some embodiments of the invention at least a portion of the object comprises a transparent modeling material.

According to some embodiments of the invention the method comprises receiving from an additive manufacturing system a set of fabrication parameters corresponding to a fabrication of the object, and automatically selecting the temperature and a duration of the exposure based on the parameters.

According to some embodiments of the invention the set of fabrication parameters comprises at least one of: the modeling material, a shape of the object, an amount of the modeling material in the object.

According to an aspect of some embodiments of the present invention there is provided a system for treating an object fabricated from a modeling material by an additive manufacturing system according to the appended claim 13.

According to some embodiments of the invention the object is fabricated from a plurality of modeling material formulations, and wherein the HDT value is a smallest HDT value among a respective plurality of HDT values of the plurality of modeling material formulations.

According to some embodiments of the invention the set of fabrication parameters comprises a geometrical parameter describing the object, and wherein the computerized controller is configured to select a duration of the exposure based on the geometrical parameter.

According to some embodiments of the invention the geometrical parameter comprises a shape of the object.

According to some embodiments of the invention the geometrical parameter comprises a volume of the object.

According to some embodiments of the invention the set of fabrication parameters comprises a type of the modeling material, and wherein the computerized controller is configured to access a computer readable medium containing thermal conductivity data, to extract a thermal conductivity value corresponding to the type of the modeling material, and to select a duration of the exposure based on the thermal conductivity value.

According to some embodiments of the invention the set of fabrication parameters comprises a thermal conductivity value of the modeling material, and wherein the computerized controller is configured select a duration of the exposure based on the thermal conductivity value.

According to some embodiments of the invention the input comprises a user interface.

According to some embodiments of the invention the input comprises a communication system configured for communicating with the additive manufacturing system to automatically receive the set of fabrication parameters therefrom.

Unless otherwise defined, all technical and/or scientific terms used herein have the same meaning as commonly understood by one of ordinary skill in the art to which the invention pertains.

Implementation of the method and/or system of embodiments can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

## BRIEF DESCRIPTION OF THE SEVERAL VIEWS OF THE DRAWINGS

In the drawings:

FIGs. 1A-D are schematic illustrations of an additive manufacturing system according to some embodiments of the invention;

FIGs. 2A-2C are schematic illustrations of printing heads according to some embodiments of the present invention;

FIGs. 3A and 3B are schematic illustrations demonstrating coordinate transformations according to some embodiments of the present invention;

FIG. 4 is a schematic illustration of a system for treating an object fabricated from a modeling material by an additive manufacturing system, according to some embodiments of the present invention;

FIG. 5 shows yellowness index as a function of time, obtained during an experiment performed according to some embodiments of the present invention, to investigate the effect of storage on the yellowness index;

FIG. 6 shows yellowness index as a function of time, obtained during another experiment performed according to some embodiments of the present invention to investigate the effect of different lighting scenarios on the yellowness index;

FIG. 7 shows yellowness index as a function of time, obtained during another experiment performed according to some embodiments of the present invention to investigate the effect of light spectrum on the yellowness index; and

FIG. 8 shows yellowness index as a function of time, obtained during an additional experiment performed according to some embodiments of the present invention, to compare between the effects of white and blue light on the yellowness index.

FIGs. 9A and 9B show spectral contents of a visible light suitable for the present embodiments (FIG. 9A) and of a white LED (FIG. 9B).

## DESCRIPTION OF SPECIFIC EMBODIMENTS OF THE INVENTION

The present invention relates to method and system for treating an object manufactured by additive manufacturing.

The method and system of the present embodiments treat an object manufactured by additive manufacturing (AM). Prior to the treatment as further detailed below, the object to be treated is typically manufactured in a layerwise manner by forming, based on computer object data, a plurality of layers in a configured pattern corresponding to the shape of the objects. In order to provide a self-contained description of the method and system of the present embodiments, some preferred additive manufacturing techniques that are suitable for the present embodiments will be described.

The computer object data used for manufacturing the object can be in any known format, including, without limitation, a Standard Tessellation Language (STL) or a StereoLithography Contour (SLC) format, an OBJ File format (OBJ), a 3D Manufacturing Format (3MF), Virtual Reality Modeling Language (VRML), Additive Manufacturing File (AMF) format, Drawing Exchange Format (DXF), Polygon File Format (PLY) or any other format suitable for Computer-Aided Design (CAD).

The term "object" as used herein refers to a whole object or a part thereof.

Each layer can be formed by an AM apparatus which scans a two-dimensional surface and patterns it. While scanning, the apparatus visits a plurality of target locations on the two-dimensional layer or surface, and decides, for each target location or a group of target locations, whether or not the target location or group of target locations is to be occupied by building material formulation, and which type of building material formulation is to be delivered thereto. The decision is made according to a computer image of the surface.

In preferred embodiments the AM comprises three-dimensional printing, more preferably three-dimensional inkjet printing. In these embodiments a building material is dispensed from a printing head having one or more arrays of nozzles to deposit building material in layers on a supporting structure. The AM apparatus thus dispenses building material in target locations which are to be occupied and leaves other target locations void. The apparatus typically includes a plurality of arrays of nozzles, each of which can be configured to dispense a different building material. This is typically achieved by providing the printing head with a plurality of fluid channels separated from each other, wherein each channel receives a different building material through a separate inlet and conveys it to a different array of nozzles.

Thus, different target locations can be occupied by different building material formulations. The types of building material formulations can be categorized into two major categories: modeling material formulation and support material formulation. The support material formulation serves as a supporting matrix or construction for supporting the object or object parts during the fabrication process and/or other purposes, e.g., providing hollow or porous objects. Support constructions may additionally include modeling material formulation elements, e.g. for further support strength.

The modeling material formulation is generally a composition which is formulated for use in additive manufacturing and which is able to form a three-dimensional object on its own, *i.e.,* without having to be mixed or combined with any other substance.

The final three-dimensional object is made of the modeling material formulation or a combination of modeling material formulations or modeling and support material formulations or modification thereof (*e.g.*, following curing). All these operations are well-known to those skilled in the art of solid freeform fabrication.

In some exemplary embodiments an object is manufactured by dispensing two or more different modeling material formulations, each material formulation from a different array of nozzles (belonging to the same or different printing heads) of the AM apparatus. In some embodiments, two or more such arrays of nozzles that dispense different modeling material formulations are both located in the same printing head of the AM apparatus. In some embodiments, arrays of nozzles that dispense different modeling material formulations are located in separate printing heads, for example, a first array of nozzles dispensing a first modeling material formulation is located in a first printing head, and a second array of nozzles dispensing a second modeling material formulation is located in a second printing head.

In some embodiments, an array of nozzles that dispense a modeling material formulation and an array of nozzles that dispense a support material formulation are both located in the same printing head. In some embodiments, an array of nozzles that dispense a modeling material formulation and an array of nozzles that dispense a support material formulation are located in separate printing heads.

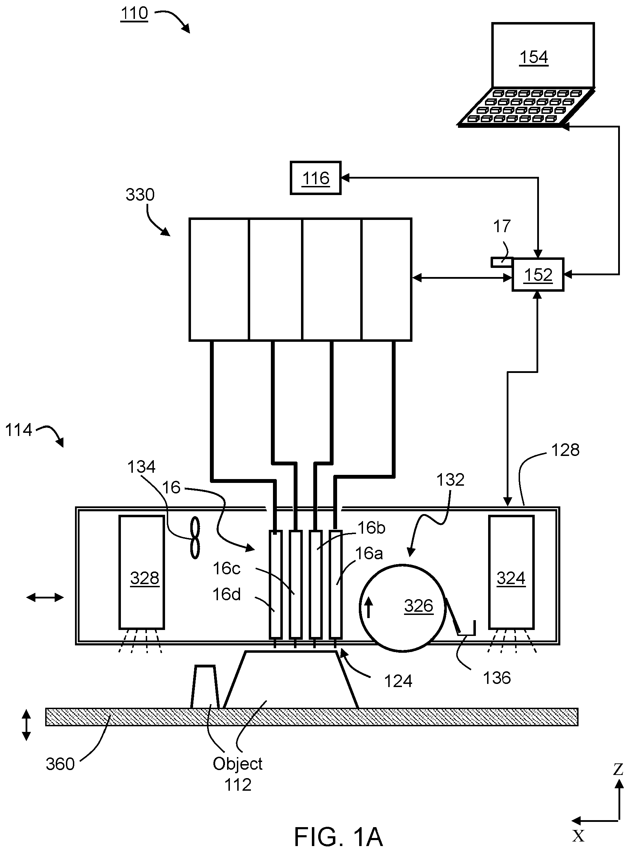

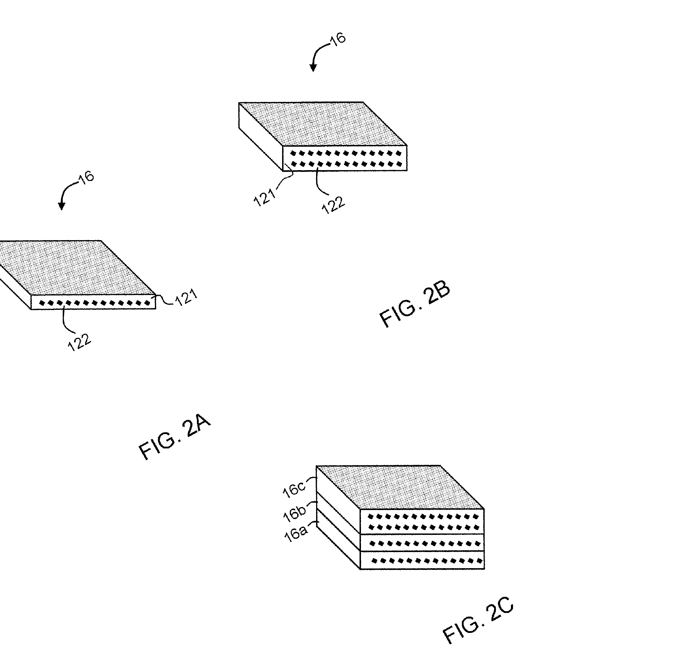

A representative and non-limiting example of a system **110** suitable for AM of an object **112** according to some embodiments of the present invention is illustrated in FIG. 1A. System **110** comprises an additive manufacturing apparatus **114** having a dispensing unit **16** which comprises a plurality of printing heads. Each head preferably comprises one or more arrays of nozzles **122,** typically mounted on an orifice plate **121,** as illustrated in FIGs. 2A-C described below, through which a liquid building material formulation **124** is dispensed.

Preferably, but not obligatorily, apparatus **114** is a three-dimensional printing apparatus, in which case the printing heads are printing heads, and the building material formulation is dispensed via inkjet technology. This need not necessarily be the case, since, for some applications, it may not be necessary for the additive manufacturing apparatus to employ three-dimensional printing techniques. Representative examples of additive manufacturing apparatus contemplated according to various exemplary embodiments of the present invention include, without limitation, fused deposition modeling apparatus and fused material formulation deposition apparatus.

Each printing head is optionally and preferably fed via one or more building material formulation reservoirs which may optionally include a temperature control unit (*e.g.,* a temperature sensor and/or a heating device), and a material formulation level sensor. To dispense the building material formulation, a voltage signal is applied to the printing heads to selectively deposit droplets of material formulation via the printing head nozzles, for example, as in piezoelectric inkjet printing technology. Another example includes thermal inkjet printing heads. In these types of heads, there are heater elements in thermal contact with the building material formulation, for heating the building material formulation to form gas bubbles therein, upon activation of the heater elements by a voltage signal. The gas bubbles generate pressures in the building material formulation, causing droplets of building material formulation to be ejected through the nozzles. Piezoelectric and thermal printing heads are known to those skilled in the art of solid freeform fabrication. For any types of inkjet printing heads, the dispensing rate of the head depends on the number of nozzles, the type of nozzles and the applied voltage signal rate (frequency).

Optionally, the overall number of dispensing nozzles or nozzle arrays is selected such that half of the dispensing nozzles are designated to dispense support material formulation and half of the dispensing nozzles are designated to dispense modeling material formulation, i.e. the number of nozzles jetting modeling material formulations is the same as the number of nozzles jetting support material formulation. In the representative example of FIG. 1A, four printing heads **16a, 16b, 16c** and **16d** are illustrated. Each of heads **16a, 16b, 16c** and **16d** has a nozzle array. In this Example, heads **16a** and **16b** can be designated for modeling material formulation/s and heads **16c** and **16d** can be designated for support material formulation. Thus, head **16a** can dispense one modeling material formulation, head **16b** can dispense another modeling material formulation and heads **16c** and **16d** can both dispense support material formulation. In an alternative embodiment, heads **16c** and **16d,** for example, may be combined in a single head having two nozzle arrays for depositing support material formulation. In a further alternative embodiment any one or more of the printing heads may have more than one nozzle arrays for depositing more than one material formulation, e.g. two nozzle arrays for depositing two different modeling material formulations or a modeling material formulation and a support material formulation, each formulation via a different array or number of nozzles.

Generally, the number of arrays of nozzles that dispense modeling material formulation, the number of arrays of nozzles that dispense support material formulation, and the number of nozzles in each respective array are selected such as to provide a predetermined ratio, $a$, between the maximal dispensing rate of the support material formulation and the maximal dispensing rate of modeling material formulation. The value of the predetermined ratio, $a$, is preferably selected to ensure that in each formed layer, the height of modeling material formulation equals the height of support material formulation. Typical values for $a$ are from about 0.6 to about 1.5.

As used herein throughout the term "about" refers to $\pm$ 10 %.

For example, for $a = 1$, the overall dispensing rate of support material formulation is generally the same as the overall dispensing rate of the modeling material formulation when all the arrays of nozzles operate.

Apparatus **114** can comprise, for example, M modeling heads each having m arrays of p nozzles, and S support heads each having s arrays of q nozzles such that $M \times m \times p = S \times s \times q$. Each of the $M \times m$ modeling arrays and $S \times s$ support arrays can be manufactured as a separate physical unit, which can be assembled and disassembled from the group of arrays. In this embodiment, each such array optionally and preferably comprises a temperature control unit and a material formulation level sensor of its own, and receives an individually controlled voltage for its operation.

Apparatus **114** can further comprise a solidifying device **324** which can include any device configured to emit light, heat or the like that may cause the deposited material formulation to harden. For example, solidifying device **324** can comprise one or more radiation sources, which can be, for example, an ultraviolet or visible or infrared lamp, or other sources of electromagnetic radiation, or electron beam source, depending on the modeling material formulation being used. In some embodiments of the present invention, solidifying device **324** serves for curing or solidifying the modeling material formulation.

In addition to solidifying device **324,** apparatus **114** optionally and preferably comprises an additional radiation source **328** for solvent evaporation. Radiation source **328** optionally and preferably generates infrared radiation. In various exemplary embodiments of the invention solidifying device **324** comprises a radiation source generating ultraviolet radiation, and radiation source **328** generates infrared radiation.

In some embodiments of the present invention apparatus **114** comprises cooling system **134** such as one or more fans or the like.

The printing head(s) and radiation source are preferably mounted in a frame or block **128** which is preferably operative to reciprocally move over a tray **360,** which serves as the working surface. In some embodiments of the present invention the radiation sources are mounted in the block such that they follow in the wake of the printing heads to at least partially cure or solidify the material formulations just dispensed by the printing heads. Tray **360** is positioned horizontally. According to the common conventions an X-Y-Z Cartesian coordinate system is selected such that the X-Y plane is parallel to tray **360.** Tray **360** is preferably configured to move vertically (along the Z direction), typically downward. In various exemplary embodiments of the invention, apparatus **114** further comprises one or more leveling devices **132,** e.g. a roller **326.** Leveling device **326** serves to straighten, level and/or establish a thickness of the newly formed layer prior to the formation of the successive layer thereon. Leveling device **326** preferably comprises a waste collection device **136** for collecting the excess material formulation generated during leveling. Waste collection device **136** may comprise any mechanism that delivers the material formulation to a waste tank or waste cartridge.

In use, the printing heads of unit **16** move in a scanning direction, which is referred to herein as the X direction, and selectively dispense building material formulation in a predetermined configuration in the course of their passage over tray **360.** The building material formulation typically comprises one or more types of support material formulation and one or more types of modeling material formulation. The passage of the printing heads of unit **16** is followed by the curing of the modeling material formulation(s) by radiation source **126.** In the reverse passage of the heads, back to their starting point for the layer just deposited, an additional dispensing of building material formulation may be carried out, according to predetermined configuration. In the forward and/or reverse passages of the printing heads, the layer thus formed may be straightened by leveling device **326,** which preferably follows the path of the printing heads in their forward and/or reverse movement. Once the printing heads return to their starting point along the X direction, they may move to another position along an indexing direction, referred to herein as the Y direction, and continue to build the same layer by reciprocal movement along the X direction. Alternately, the printing heads may move in the Y direction between forward and reverse movements or after more than one forward-reverse movement. The series of scans performed by the printing heads to complete a single layer is referred to herein as a single scan cycle.

Once the layer is completed, tray **360** is lowered in the Z direction to a predetermined Z level, according to the desired thickness of the layer subsequently to be printed. The procedure is repeated to form three-dimensional object **112** in a layerwise manner.

In another embodiment, tray **360** may be displaced in the Z direction between forward and reverse passages of the printing head of unit **16,** within the layer. Such Z displacement is carried out in order to cause contact of the leveling device with the surface in one direction and prevent contact in the other direction.

System **110** optionally and preferably comprises a building material formulation supply system **330** which comprises the building material formulation containers or cartridges and supplies a plurality of building material formulations to fabrication apparatus **114.**

A control unit **152** controls fabrication apparatus **114** and optionally and preferably also supply system **330.** Control unit **152** typically includes an electronic circuit configured to perform the controlling operations. Control unit **152** preferably communicates with a data processor **154** which transmits digital data pertaining to fabrication instructions based on computer object data, *e.g.,* a CAD configuration represented on a computer readable medium in a form of a Standard Tessellation Language (STL) format or the like. Typically, control unit **152** controls the voltage applied to each printing head or each nozzle array and the temperature of the building material formulation in the respective printing head or respective nozzle array.

Once the manufacturing data is loaded to control unit **152** it can operate without user intervention. In some embodiments, control unit **152** receives additional input from the operator, *e.g.,* using data processor **154** or using a user interface **116** communicating with unit **152.** User interface **116** can be of any type known in the art, such as, but not limited to, a keyboard, a touch screen and the like. For example, control unit **152** can receive, as additional input, one or more building material formulation types and/or attributes, such as, but not limited to, color, characteristic distortion and/or transition temperature, viscosity, electrical property, magnetic property. Other attributes and groups of attributes are also contemplated.

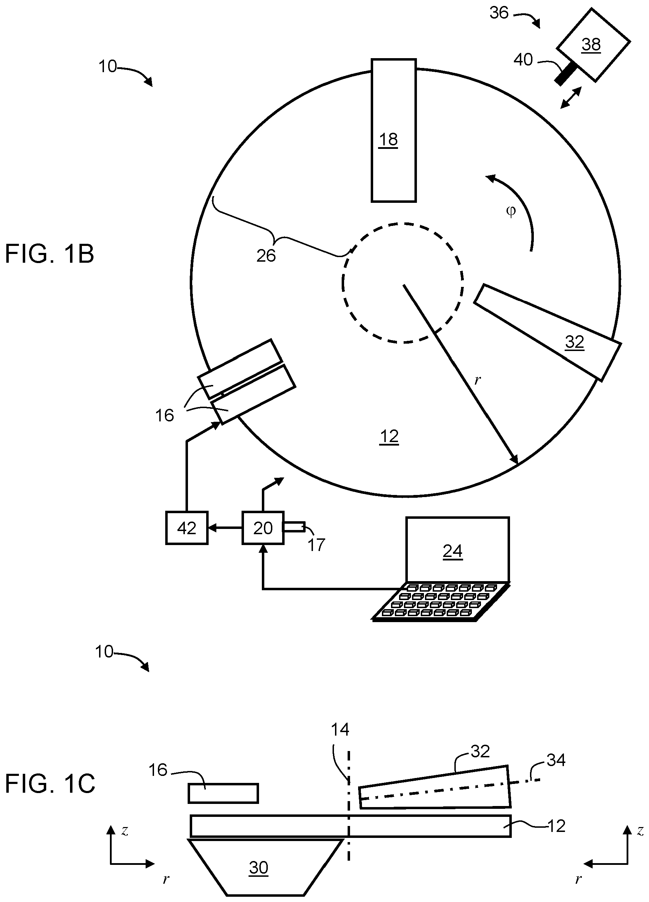

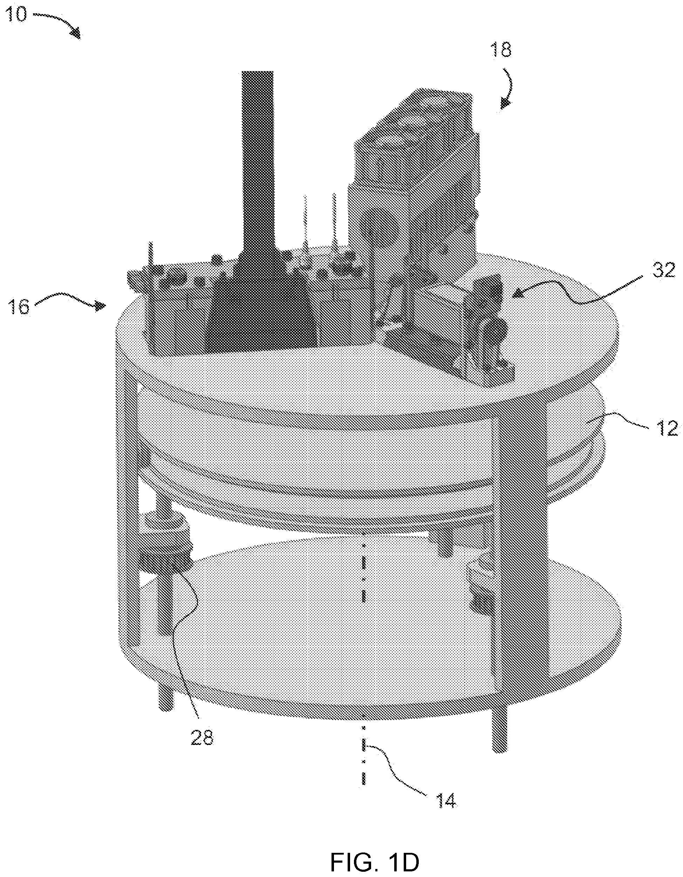

Another representative and non-limiting example of a system **10** suitable for AM of an object according to some embodiments of the present invention is illustrated in FIGs. 1B-D. FIGs. 1B-D illustrate a top view (FIG. 1B), a side view (FIG. 1C) and an isometric view (FIG. 1D) of system **10.**

In the present embodiments, system **10** comprises a tray **12** and a plurality of inkjet printing heads **16,** each having one or more arrays of nozzles with respective one or more pluralities of separated nozzles. The material used for the three-dimensional printing is supplied to heads **16 by** a building material supply system **42.** Tray **12** can have a shape of a disk or it can be annular. Non-round shapes are also contemplated, provided they can be rotated about a vertical axis.

Tray **12** and heads **16** are optionally and preferably mounted such as to allow a relative rotary motion between tray **12** and heads **16.** This can be achieved by (i) configuring tray **12** to rotate about a vertical axis **14** relative to heads **16,** (ii) configuring heads **16** to rotate about vertical axis **14** relative to tray **12,** or (iii) configuring both tray **12** and heads **16** to rotate about vertical axis **14** but at different rotation velocities (*e.g.,* rotation at opposite direction). While some embodiments of system **10** are described below with a particular emphasis to configuration (i) wherein the tray is a rotary tray that is configured to rotate about vertical axis **14** relative to heads **16,** it is to be understood that the present application contemplates also configurations (ii) and (iii) for system **10.** Any one of the embodiments of system **10** described herein can be adjusted to be applicable to any of configurations (ii) and (iii), and one of ordinary skills in the art, provided with the details described herein, would know how to make such adjustment.

In the following description, a direction parallel to tray **12** and pointing outwardly from axis **14** is referred to as the radial direction *r*, a direction parallel to tray **12** and perpendicular to the radial direction *r* is referred to herein as the azimuthal direction $\varphi$, and a direction perpendicular to tray **12** is referred to herein is the vertical direction *z*.

The radial direction *r* in system **10** enacts the indexing direction y in system **110,** and the azimuthal direction $\varphi$ enacts the scanning direction x in system **110.** Therefore, the radial direction is interchangeably referred to herein as the indexing direction, and the azimuthal direction is interchangeably referred to herein as the scanning direction.

The term "radial position," as used herein, refers to a position on or above tray **12** at a specific distance from axis **14.** When the term is used in connection to a printing head, the term refers to a position of the head which is at specific distance from axis **14.** When the term is used in connection to a point on tray **12,** the term corresponds to any point that belongs to a locus of points that is a circle whose radius is the specific distance from axis **14** and whose center is at axis **14.**

The term "azimuthal position," as used herein, refers to a position on or above tray **12** at a specific azimuthal angle relative to a predetermined reference point. Thus, radial position refers to any point that belongs to a locus of points that is a straight line forming the specific azimuthal angle relative to the reference point.

The term "vertical position," as used herein, refers to a position over a plane that intersect the vertical axis **14** at a specific point.

Tray **12** serves as a building platform for three-dimensional printing. The working area on which one or objects are printed is typically, but not necessarily, smaller than the total area of tray **12.** In some embodiments of the present invention the working area is annular. The working area is shown at **26.** In some embodiments of the present invention tray **12** rotates continuously in the same direction throughout the formation of object, and in some embodiments of the present invention tray reverses the direction of rotation at least once (*e.g.,* in an oscillatory manner) during the formation of the object. Tray **12** is optionally and preferably removable. Removing tray **12** can be for maintenance of system **10,** or, if desired, for replacing the tray before printing a new object. In some embodiments of the present invention system **10** is provided with one or more different replacement trays (*e.g.,* a kit of replacement trays), wherein two or more trays are designated for different types of objects (*e.g.,* different weights) different operation modes (*e.g.,* different rotation speeds), *etc.* The replacement of tray **12** can be manual or automatic, as desired. When automatic replacement is employed, system **10** comprises a tray replacement device **36** configured for removing tray **12** from its position below heads **16** and replacing it by a replacement tray (not shown). In the representative illustration of FIG. 1B tray replacement device **36** is illustrated as a drive **38** with a movable arm **40** configured to pull tray **12,** but other types of tray replacement devices are also contemplated.

Exemplified embodiments for the printing head **16** are illustrated in FIGs. 2A-2C. These embodiments can be employed for any of the AM systems described above, including, without limitation, system **110** and system **10.**

FIGs. 2A-B illustrate a printing head **16** with one (FIG. 2A) and two (FIG. 2B) nozzle arrays **22.** The nozzles in the array are preferably aligned linearly, along a straight line. In embodiments in which a particular printing head has two or more linear nozzle arrays, the nozzle arrays are optionally and preferably can be parallel to each other. When a printing head has two or more arrays of nozzles (*e.g.,* FIG. 2B) all arrays of the head can be fed with the same building material formulation, or at least two arrays of the same head can be fed with different building material formulations.

When a system similar to system **110** is employed, all printing heads **16** are optionally and preferably oriented along the indexing direction with their positions along the scanning direction being offset to one another.

When a system similar to system **10** is employed, all printing heads **16** are optionally and preferably oriented radially (parallel to the radial direction) with their azimuthal positions being offset to one another. Thus, in these embodiments, the nozzle arrays of different printing heads are not parallel to each other but are rather at an angle to each other, which angle being approximately equal to the azimuthal offset between the respective heads. For example, one head can be oriented radially and positioned at azimuthal position $\varphi_1$, and another head can be oriented radially and positioned at azimuthal position $\varphi_2$. In this example, the azimuthal offset between the two heads is $\varphi_1$-$\varphi_2$, and the angle between the linear nozzle arrays of the two heads is also $\varphi_1$-$\varphi_2$.

In some embodiments, two or more printing heads can be assembled to a block of printing heads, in which case the printing heads of the block are typically parallel to each other. A block including several inkjet printing heads **16a, 16b, 16c** is illustrated in FIG. 2C.

In some embodiments, system **10** comprises a stabilizing structure **30** positioned below heads **16** such that tray **12** is between stabilizing structure **30** and heads **16**. Stabilizing structure **30** may serve for preventing or reducing vibrations of tray **12** that may occur while inkjet printing heads **16** operate. In configurations in which printing heads **16** rotate about axis **14,** stabilizing structure **30** preferably also rotates such that stabilizing structure **30** is always directly below heads **16** (with tray **12** between heads **16** and tray **12).**

Tray **12** and/or printing heads **16** is optionally and preferably configured to move along the vertical direction z, parallel to vertical axis **14** so as to vary the vertical distance between tray **12** and printing heads **16**. In configurations in which the vertical distance is varied by moving tray **12** along the vertical direction, stabilizing structure **30** preferably also moves vertically together with tray **12**. In configurations in which the vertical distance is varied by heads **16** along the vertical direction, while maintaining the vertical position of tray **12** fixed, stabilizing structure **30 is** also maintained at a fixed vertical position.

The vertical motion can be established by a vertical drive **28**. Once a layer is completed, the vertical distance between tray **12** and heads **16** can be increased (*e.g.,* tray **12** is lowered relative to heads **16)** by a predetermined vertical step, according to the desired thickness of the layer subsequently to be printed. The procedure is repeated to form a three-dimensional object in a layerwise manner.

The operation of inkjet printing heads **16** and optionally and preferably also of one or more other components of system **10,** *e.g.,* the motion of tray **12,** are controlled by a controller **20**. The controller can have an electronic circuit and a non-volatile memory medium readable by the circuit, wherein the memory medium stores program instructions which, when read by the circuit, cause the circuit to perform control operations as further detailed below.

Controller **20** can also communicate with a host computer **24** which transmits digital data pertaining to fabrication instructions based on computer object data, *e.g.,* in a form of a Standard Tessellation Language (STL) or a Stereo-Lithography Contour (SLC) format, Virtual Reality Modeling Language (VRML), Additive Manufacturing File (AMF) format, Drawing Exchange Format (DXF), Polygon File Format (PLY) or any other format suitable for Computer-Aided Design (CAD). The object data formats are typically structured according to a Cartesian system of coordinates. In these cases, computer **24** preferably executes a procedure for transforming the coordinates of each slice in the computer object data from a Cartesian system of coordinates into a polar system of coordinates. Computer **24** optionally and preferably transmits the fabrication instructions in terms of the transformed system of coordinates. Alternatively, computer **24** can transmit the fabrication instructions in terms of the original system of coordinates as provided by the computer object data, in which case the transformation of coordinates is executed by the circuit of controller **20.**

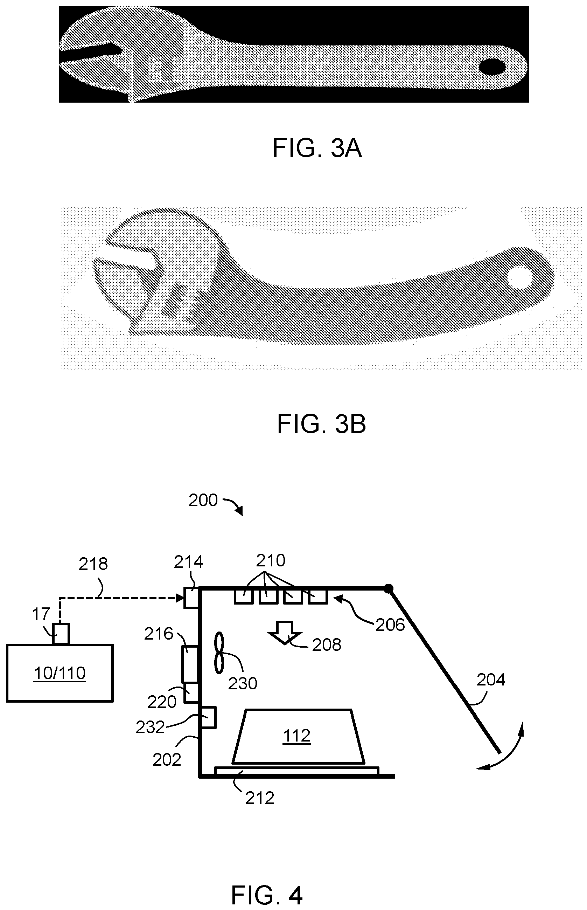

The transformation of coordinates allows three-dimensional printing over a rotating tray. In non-rotary systems with a stationary tray with the printing heads typically reciprocally move above the stationary tray along straight lines. In such systems, the printing resolution is the same at any point over the tray, provided the dispensing rates of the heads are uniform. In system **10,** unlike non-rotary systems, not all the nozzles of the head points cover the same distance over tray **12** during at the same time. The transformation of coordinates is optionally and preferably executed so as to ensure equal amounts of excess material formulation at different radial positions. Representative examples of coordinate transformations according to some embodiments of the present invention are provided in FIGs. 3A-B, showing three slices of an object (each slice corresponds to fabrication instructions of a different layer of the objects), where FIG. 3A illustrates a slice in a Cartesian system of coordinates and FIG. 3B illustrates the same slice following an application of a transformation of coordinates procedure to the respective slice.

Typically, controller **20** controls the voltage applied to the respective component of the system **10** based on the fabrication instructions and based on the stored program instructions as described below.

Generally, controller **20** controls printing heads **16** to dispense, during the rotation of tray **12,** droplets of building material formulation in layers, such as to print a three-dimensional object on tray **12.**

System **10** optionally and preferably comprises one or more radiation sources **18,** which can be, for example, an ultraviolet or visible or infrared lamp, or other sources of electromagnetic radiation, or electron beam source, depending on the modeling material formulation being used. Radiation source can include any type of radiation emitting device, including, without limitation, light emitting diode (LED), digital light processing (DLP) system, resistive lamp and the like. Radiation source **18** serves for curing or solidifying the modeling material formulation. In various exemplary embodiments of the invention the operation of radiation source **18** is controlled by controller **20** which may activate and deactivate radiation source **18** and may optionally also control the amount of radiation generated by radiation source **18.**

In some embodiments of the invention, system **10** further comprises one or more leveling devices **32** which can be manufactured as a roller or a blade. Leveling device **32** serves to straighten the newly formed layer prior to the formation of the successive layer thereon. In some embodiments, leveling device **32** has the shape of a conical roller positioned such that its symmetry axis **34** is tilted relative to the surface of tray **12** and its surface is parallel to the surface of the tray. This embodiment is illustrated in the side view of system **10** (FIG. 1C).

The conical roller can have the shape of a cone or a conical frustum.

The opening angle of the conical roller is preferably selected such that there is a constant ratio between the radius of the cone at any location along its axis **34** and the distance between that location and axis **14.** This embodiment allows roller **32** to efficiently level the layers, since while the roller rotates, any point $p$ on the surface of the roller has a linear velocity which is proportional (*e.g.,* the same) to the linear velocity of the tray at a point vertically beneath point $p$. In some embodiments, the roller has a shape of a conical frustum having a height $h$, a radius $R_1$ at its closest distance from axis **14,** and a radius $R_2$ at its farthest distance from axis **14,** wherein the parameters $h$, $R_1$ and $R_2$ satisfy the relation $R_1/R_2=(R-h)/h$ and wherein $R$ is the farthest distance of the roller from axis **14** (for example, R can be the radius of tray **12).**

The operation of leveling device **32** is optionally and preferably controlled by controller **20** which may activate and deactivate leveling device **32** and may optionally also control its position along a vertical direction (parallel to axis **14**) and/or a radial direction (parallel to tray **12** and pointing toward or away from axis **14.**

In some embodiments of the present invention printing heads **16** are configured to reciprocally move relative to tray along the radial direction $r$. These embodiments are useful when the lengths of the nozzle arrays **22** of heads **16** are shorter than the width along the radial direction of the working area **26** on tray **12.** The motion of heads **16** along the radial direction is optionally and preferably controlled by controller **20.**

Some embodiments contemplate the fabrication of an object by dispensing different material formulations from different arrays of nozzles (belonging to the same or different printing head). These embodiments provide, *inter alia,* the ability to select material formulations from a given number of material formulations and define desired combinations of the selected material formulations and their properties. According to the present embodiments, the spatial locations of the deposition of each material formulation with the layer is defined, either to effect occupation of different three-dimensional spatial locations by different material formulations, or to effect occupation of substantially the same three-dimensional location or adjacent three-dimensional locations by two or more different material formulations so as to allow post deposition spatial combination of the material formulations within the layer, thereby to form a composite material formulation at the respective location or locations.

Any post deposition combination or mix of modeling material formulations is contemplated. For example, once a certain material formulation is dispensed it may preserve its original properties. However, when it is dispensed simultaneously with another modeling material formulation or other dispensed material formulations which are dispensed at the same or nearby locations, a composite material formulation having a different property or properties to the dispensed material formulations may be formed.

In some embodiments of the present invention the system dispenses digital material formulation for at least one of the layers.

The phrase "digital material formulations", as used herein and in the art, describes a combination of two or more material formulations on a pixel level or voxel level such that pixels or voxels of different material formulations are interlaced with one another over a region. Such digital material formulations may exhibit new properties that are affected by the selection of types of material formulations and/or the ratio and relative spatial distribution of two or more material formulations.

As used herein, a "voxel" of a layer refers to a physical three-dimensional elementary volume within the layer that corresponds to a single pixel of a bitmap describing the layer. The size of a voxel is approximately the size of a region that is formed by a building material, once the building material is dispensed at a location corresponding to the respective pixel, leveled, and solidified.

The present embodiments thus enable the deposition of a broad range of material formulation combinations, and the fabrication of an object which may consist of multiple different combinations of material formulations, in different parts of the object, according to the properties desired to characterize each part of the object.

Further details on the principles and operations of an AM system suitable for the present embodiments are found in U.S. Patent No. 9031680.

The inventors found that in some cases, the modeling material, once cured, acquires a yellowish hue, thus producing regions of yellowed material, which is undesired, particularly, but not necessarily, for fabricated objects in which one or more regions are intended to be generally transparent and colorless.

The term "transparent" describes a property of a material that reflects the transmittance of light therethrough. A transparent material is typically characterized as capable of transmitting at least 70 % of a light that passes therethrough, or by transmittance of at least 70 %. Transmittance of a material can be determined using methods well known in the art.

Representative examples of such materials including, without limitation, material having the trade names RGD720, MED610™, MED625FLX™, VeroClear™, and VeroUltra™ Clear, all commercially available from Stratasys Ltd., Israel. Additional transparent formulations are described in co-filed, PCT Application entitled "ADDITIVE MANUFACTURING OF THREE-DIMENSIONAL OBJECTS CONTAINING A TRANSPARENT MATERIAL" (Attorney Docket No. 89343), which claims the benefit of priority of U.S. Provisional Patent Application No. 63/094,801, in International Publication No. WO 2020/065654, and in International Application No. PCT/IL2020/050396.

In some preferred embodiments of the present invention at least one of the modeling material formulations from which the object is fabricated contains a photoinitiator.

According to some embodiments of the present invention the modeling material is obtained upon hardening a photocurable modeling material formulation that comprises a photoinitiator that undergoes photobleaching when exposed to visible light having a peak wavelength less than 470 nm, more preferably less than 460 nm, for example, 450 nm of less.

As use herein "undergoes photobleaching" refers to a transformation in which a residual amount of the photoinitiator is decomposed, so that the transmittance of the material, once hardened, is increased by at least X% for light at a spectral band characterized by a width of at least Y nm, where X equals 5 or 10 or 20 or 30, and Y equals 10 or 20 or 30 or 40 or 50. Representative example of a spectral band for which the transmittance is reduced is yellow light (e.g., wavelength of from about 565 nm to about 590 nm). The transmittance of the material for light outside the spectral band is preferably unchanged.

In some embodiments of the present invention the photobleaching results in a decrease in the yellowness index of the modeling material by at least 5 units on a CIE XYZ color space.

According to some embodiments of the present invention the photoinitiator is selected from a phosphine oxide type photoinitiator and a germanium-based photoinitiator.

According to some embodiments of the present invention the germanium-based photoinitiator is an acyl germane type photoinitiator, including monoacyl, diacyl, triacyl, and tetracyl germane type.

According to some of any of the embodiments described herein, the photoinitiator(s) comprises, or consists essentially of, a phosphine oxide-type (e.g., mono-acylated (MAPO) or bis-acylated phosphine oxide-type (BAPO) photoinitiator).

Exemplary monoacyl and bisacyl phosphine oxides include, but are not limited to, (2,4,6-trimethylbenzoyl)-diphenylphosphine oxide (TPO), bis(2,4,6-trimethylbenzoyl) phenylphosphine oxide, dibenzoylphenylphosphine oxide, bis(2,6-dimethoxybenzoyl)phenyl phosphine oxide, tris(2,4-dimethylbenzoyl) phosphine oxide, tris(2-methoxybenzoyl) phosphine oxide, 2,6-dimethoxybenzoyldiphenyl phosphine oxide, 2,6-dichlorobenzoyldiphenyl phosphine oxide, 2,3,5,6-tetramethylbenzoyldiphenyl phosphine oxide, benzoyl-bis(2,6-dimethylphenyl) phosphonate, and 2,4,6-trimethylbenzoylethoxyphenyl phosphine oxide. Commercially available phosphine oxide photoinitiators capable of free-radical initiation when irradiated at wavelength ranges of greater than about 380 nm and up to about 450 nm include bis(2,4,6-trimethylbenzoyl)phenyl phosphine oxide (marketed as IRGACURE® 819), bis(2,6-dimethoxybenzoyl)-(2,4,4-trimethylpentyl) phosphine oxide (marketed as CGI 403), a 25:75 mixture, by weight, of bis(2,6-dimethoxybenzoyl)-2,4,4-trimethylpentyl phosphine oxide and 2-hydroxy-2-methyl-1-phenylpropan-1-one (marketed as IRGACURE® 1700), a 1:1 mixture, by weight, of bis(2,4,6-trimethylbenzoyl)phenyl phosphine oxide and 2-hydroxy-2-methyl-1-phenylpropane-1-one (marketed as DAROCUR® 4265), and ethyl 2,4,6-trimethylbenzylphenyl phosphinate (LUCIRIN LR8893X).

Commercially available phosphine oxide photoinitiators capable of free-radical initiation when irradiated at wavelength ranges of greater than about 380 nm and up to about 450 nm include bis(2,4,6-trimethylbenzoyl)phenyl phosphine oxide (marketed as IRGACURE® 819), bis(2,6-dimethoxybenzoyl)-(2,4,4-trimethylpentyl) phosphine oxide (marketed as CGI 403), a 25:75 mixture, by weight, of bis(2,6-dimethoxybenzoyl)-2,4,4-trimethylpentyl phosphine oxide and 2-hydroxy-2-methyl-1-phenylpropan-1-one (marketed as IRGACURE® 1700), a 1:1 mixture, by weight, of bis(2,4,6-trimethylbenzoyl)phenyl phosphine oxide and 2-hydroxy-2-methyl-1-phenylpropane-1-one (marketed as DAROCUR® 4265), and ethyl 2,4,6-trimethylbenzylphenyl phosphinate (LUCIRIN LR8893X).

In exemplary embodiments, the phosphine oxide type photoinitiator is activated at a wavelength higher than 380 nm, e.g., of from about 390 to about 440 nm.

In exemplary embodiments, the phosphine oxide type photoinitiator is or comprises (2,4,6-trimethylbenzoyl)-diphenylphosphine oxide (TPO) and/or bis(2,4,6-trimethylbenzoyl)phenyl phosphine oxide (marketed as IRGACURE® 819 and also referred to herein and in the art as I-819).

The inventors found that at least some of the yellowish hue can be removed by post-fabrication treatment of the object by light and heat, in a process referred to herein as photobleaching. The inventors unexpectedly discovered that for a particular subrange of wavelengths within the visible light range, photobleaching is significantly faster and more efficient compared to other wavelengths. In particular, the inventors found that visible light having a peak wavelength less than 470 nm, more preferably less than 460 nm, for example, 450 nm of less, reduces yellowish hue faster than light having other peak wavelengths, or substantially white light.

Thus, according to some embodiments of the present invention, an object fabricated from a modeling material by additive manufacturing is treated by exposing it to visible light having a peak wavelength less than 470 nm. The peak wavelength is preferably at least 350 nm, more preferably at least 370 nm more preferably at least 390 nm, e.g., 400 nm or more.

In some embodiments of the present invention, at any time interval of the exposure of the object to the visible light, X % of the spectral energy of the visible light is within the spectral range spanning from about 430 nm to about 470 nm or from about 440 nm to about 460 nm, where X is at least 20 or at least 30 or at least 40 or at least 50 or at least 60 or at least 70 or at least 80 or at least 90 or at least 95.

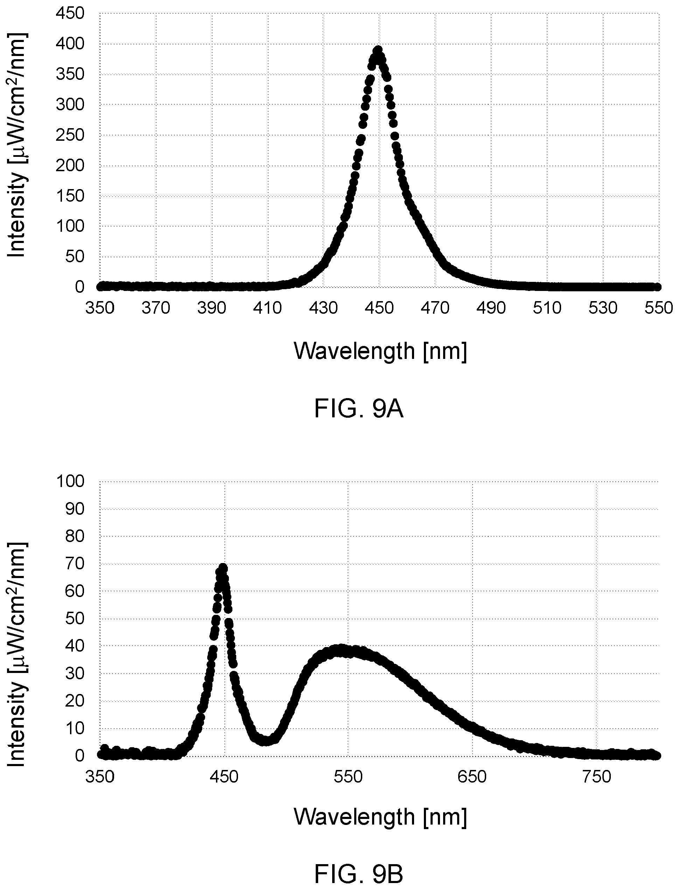

A representative example of a spectral content of a visible light suitable for the present embodiments is shown in FIG. 9A. A spectral content of a white LED is shown in FIG. 9B. As shown, in FIG. 9A most of the spectral energy is within the spectral range spanning from about 430 nm to about 470 nm, whereas in FIG. 9B, a significant portion of the spectral energy is delivered at longer wavelengths (500 nm and above).

The inventors also unexpectedly discovered that some dyes in the modeling material may decompose or otherwise be modified chemically when the photobleaching process is executed at too elevated temperatures, or when the photobleaching process by itself elevate the temperature of the modeling material. In particular, the inventors found that magenta dye is substantially vulnerable to the photobleaching process, in particular when the photobleaching process is at a temperature which is above the heat deflection temperature (HDT) of modeling materials that include magenta dye *(e.g.,* a modeling material comprising magenta, such as a black color).

Thus, according to some embodiments of the present invention the object is treated by exposing it to visible light as further detailed hereinabove and to temperature that is at most 5 °C less than the HDT of the modeling material. Preferably the object is fabricated from a plurality of modelling material formulations, wherein said HDT is a smallest HDT among a respective plurality of HDT values of said plurality of modeling material formulations.

The duration of the exposure to the visible light and temperature is preferably selected based on the extent of the desired effect. For example, in some embodiments of the present invention the duration of exposure is selected to reduce a yellowness index (YI) of the modeling material as calculated using the formula YI=100-Blue/[(Blue+Red+Green)/3]*100.

YI can alternatively be measured using a spectrophotometer according to the ASTM standard E 313.

In various exemplary embodiments of the invention the duration of exposure is selected to reduce YI by at least 5 units, more preferably at least 6 units, more preferably at least 7 units, more preferably at least 8 units, more preferably at least 9 units, more preferably at least 10 units.

YI can still alternatively be calculated using the formula $YI = 100 \times (C_X X - C_z Z)/Y$, where Cx and Cz are constants, and X, Y, Z are tristimulus values in the CIE XYZ color space. When the color of the modeling material is expressed in terms of other color spaces *(e.g.,* CMYK) the respective color space can be transformed to the CIE XYZ color space by color transformation. Such color transformations are well known to those having ordinary skill in the art of printing. The values of the coefficients CX and CZ is in in accordance with the ASTM standard used for defining the YI. When the ASTM standard D-1925 is used, Cx is about 1.28, Cz is about 1.06.

While it is generally desired to reduce the yellowness index of the modeling material, particularly for those parts of the object that are made of a generally transparent and colorless modeling material, it is preferred to maintain the color of colored parts of the object. In other words, it is preferred to have small color differences between the color of the colored parts after the exposure and the color of the colored parts before exposure.

Color difference is conveniently expressed herein by quantities which can be calculated using mathematical operations in the CIE (L*, a*, b*) color space. When the color of a colored region of the object is expressed in terms of other color spaces *(e.g.,* CMYK or CIE XYZ) the color difference can be expressed in those color spaces, or, alternatively, the respective color space can be transformed to the CIE (L*, a*, b*) color space by a color transformation to allow the calculation of the color difference in this space. The CIE (L*, a*, b*) color space is commonly referred to as a "uniform" color space in that steps of equal size from one color point to another in the color space are perceived approximately as equal differences in color. Every color is treated as a point in the color space and represented by the triplet (L*, a*, b*), which can be measured, for example, by a spectrometer, such as, but not limited to, a spectrometer having the tradename Ci7860 commercially available from X-Rite, Michigan, USA.

The difference between two colors can be quantified using the Euclidian distance between the corresponding points in the color space. Formally, denoting the coordinates of two colors by $(L_1^*, a_1^*, b_2^*)$ and $(L_2^*, a_2^*, b_3^*)$, the difference between the two colors is given by:

$$\Delta E^* = \sqrt{\left(L_1^* - L_2^*\right)^2 + \left(a_1^* - a_2^*\right)^2 + \left(b_1^* - b_2^*\right)^2}$$

Using the above expression for ΔE*, the color difference between the color of a colored region after the exposure and the color of the same colored region before exposure can be expressed in terms of the so called "ΔE* unit." Thus, for example, the color difference between the two colors is said to be 1 ΔE* unit if the right hand side of the above expression for ΔE* is unity.

In some embodiments of the present invention one or more of the parameters of the photobleaching process *(e.g.,* peak wavelength, temperature, duration) is selected such that for at least one colored region of the object, more preferably each colored region of the object, the color difference between the color of the colored region after the exposure and a color of the colored region before exposure is less than 2 ΔE* units.

In some embodiments of the present invention the duration of the photobleaching process is selected such that, following the treatment, the transparent modeling material from which the object is fabricated is characterized by a CIE Lightness value L* of at least 90, a CIE a* value of at least -0.35, and a CIE b* value of less than 2, or less than 1.5.

In any of the above embodiments, the one or more of the parameters of the photobleaching process can be selected manually by the operator and/or selected automatically and/or be predetermined and not selectable by the operator. For example, the peak wavelength of the light can be predetermined and not selectable by the operator (*e.g.,* set at a value between 400 nm and 500 nm or between 420 nm and 480 nm), and at least one of the temperature and the duration of exposure be selected manually or automatically.

According to present invention the method of treating an object fabricated from a modeling material by additive manufacturing, comprises: receiving as input one or more fabrication parameters of the object, said fabrication parameters comprise a heat deflection temperature (HDT) of the modeling material; based on said input, selecting a photobleaching process temperature which is less than said HDT by at most 5 °C. Furthermore the selection of a parameter is preferably object-specific, so that one or more of the fabrication parameters of the object are used as input to select the respective parameter for the photobleaching process. Representative examples of fabrication parameters that can be used as input include, the type of the modeling materials from which the object was fabricated, the thermal conductivity of the modeling materials from which the object was fabricated, the geometry of the object (*e.g.,* a thickness or a set of thicknesses along a direction, or along each of two or three directions), the amount (*e.g.*, volume, weight) of each modeling material used for fabricating the object, the duration of exposure of the object to curing radiation (if employed), etc. It is appreciated that some fabrication parameters can be obtained from information pertaining to other fabrication parameters. For example, by receiving input pertaining to the type of the modeling material, the HDT and/or thermal conductivity of this material can be obtained, *e.g.,* using lookup tables.

Once the fabrication parameter(s) are received the parameter(s) for the photobleaching process can be selected using a lookup table that associates fabrication parameters with parameters for photobleaching, or more preferably sets of fabrication parameters with sets of parameters for photobleaching. The lookup table can be used even when the actual fabrication parameters do exactly match the entries of the lookup table. In this case, the entry that best matches the actual fabrication parameters is selected and the parameters for photobleaching that correspond to the selected entry are extracted from the lookup table. The extracted parameters can be used in the photobleaching process. Alternatively the parameters to be used in the photobleaching can be calculated based on the extracted parameters, for example, by applying interpolation and/or scaling.

When the selection of the parameter(s) for the photobleaching is done automatically, it is preferably executed by receiving the fabrication parameters from the AM system (*e.g.*, system **10** or **110),** accessing a computer readable medium containing a lookup table that associates fabrication parameters with parameters for photobleaching, searching the lookup table for fabrication parameters matching the fabrication parameters received from the AM system, and extracting from the lookup table the respective parameters for the photobleaching process.

FIG. 4 is a schematic illustration of a system **200** for treating object **112** fabricated from a modeling material by an AM system, according to some embodiments of the present invention. The AM system can be any system that fabricates three-dimensional objects by additive manufacturing, such as, but not limited to, system **10** or **110** described above. System **200** comprises a treatment chamber **202** for receiving object **112**. Typically, chamber **202** is provided with a door **204** for closing chamber after object **112** has been introduced into chamber **202**. System **200** further comprises an illumination system **206** for generating light **208** to illuminate object **112**. Typically, illumination system **206** comprises one or more light sources **210** for generating light **208**. Light sources **210** can be of any type known in the art, such as, but not limited to, LED, OLED, mercury lamp, and the like. According to the present invention the illumination system generates visible light having a peak wavelength less than 470 nm, as further detailed hereinabove. A spectrum of the light **208** with the desired peak wavelength can be ensured by selecting a light source having an emission spectrum with the desired peak wavelength, or by filtering light having a broader spectrum using a filter having a transmission spectrum with the desired peak wavelength. The location of light sources **210** within chamber **202** may vary, but they are preferably located at the top internal surface and/or at the corners of chamber **202**. In some embodiments, one or more strips of LEDs are used (*e.g.,* strips of white and/or blue LEDs).

System **200** also comprises a heating system **212** for heating object **112** and/or the interior of chamber **202**. FIG. 4 illustrates an embodiment in which heating system **212** is at the bottom of chamber **202** and arranged for heating object **112** from below. However, this need not necessarily be the case, since some embodiments of the present invention contemplate placing heating system **212** at other parts of chamber **202** (*e.g.,* on one or more of the side walls, and/or the top). Further, the present embodiments contemplate a heating system with a plurality of heating elements, in which case the heating elements can either be placed at one location or distributed within chamber **202** (*e.g.,* on its walls, bottom and/or top). In some embodiments, system **200** comprises a cooling system **230** (*e.g.*, one or more fans), and/or one or more temperature sensors **232** (*e.g.,* IR sensors) for closed-loop temperature monitoring of object **112** and/or chamber **202**.

In the present invention system **200** comprises an input **214** having a circuit configured for receiving a set of fabrication parameters corresponding to the fabrication of the object by the AM system. Input **214** can, for example, comprise a user interface, such as, but not limited to, a keyboard or a touch screen. Input **214** can alternatively comprise a communication system configured for communicating with a remote user interface (not shown), and can receive signals from the remote user interface pertaining to the set of fabrication parameters. The remote user interface can be of any type known in the art. For example, the remote user interface can be selected from a group consisting of a mobile phone, a tablet computer, a notebook computer and the like. Input **214** can in some embodiments of the present invention comprise a communication system configured for communicating directly with the AM system **10/110,** in which case the AM system also comprises a communication system **17** (see also FIGs. 1A and 1B) configured to communicate with input **214.** In these embodiments, the controller or the data processor of the AM system provides the set of fabrication parameters to communication system **17** for transmission to input **214.**

The communication between input **214** and the remote interface and/or communication system **17** of the AM system can be wired communication via a cable **218,** or wireless communication, for example, via near field wireless communication technology (*e.g.*, Bluetooth, WiFi, etc.).

System **200** comprises a computerized controller **216** having a circuit configured for receiving the set of fabrication parameters from input **214** (whether input **214** is a user interface or a communication system that receives the fabrication parameters from a remote user interface or directly from the AM system). The circuit of controller **216** is also configured for operating illumination system **210** and heating system **212** based on the set of fabrication parameters. Typically, but not necessarily, controller **216** accesses a computer readable medium **220** that stores information sufficient for controller **216** to determine the parameters of the photobleaching process based on the set of fabrication parameters received via input **214.** Controller **216** then operates illumination system **210** and heating system **212** according to the determined parameters of the photobleaching process.

The present embodiments contemplate many types of information to be stored in medium **220.** Preferably, the information is in the form of a lookup table that associates fabrication parameters with parameters for photobleaching, as further detailed hereinabove. For example, when the set of fabrication parameters comprises a type of the modeling material, medium **220** can contain HDT data, *e.g.,* in the form of a lookup table having a plurality of entries each including a type of modeling material and an HDT value corresponding to the type of the modeling material of the entry. In this case, the type of modeling material is a fabrication parameter and the HDT value is a parameter for photobleaching. Controller **216** can then search the HDT data, extract the HDT value that correspond to the type of the modeling material received via input **214,** and control heating system **212** to maintain in the chamber a temperature that is less than the HDT value as further detailed hereinabove. According to the present claims 1 and 13, the set of fabrication parameters received via input **214** can already include the HDT value, in which case computerized controller **216** can control heating system **212** to maintain a temperature less than HDT value without searching medium **220.**

When the set of fabrication parameters comprises a type of the modeling material, medium **220** can also contain thermal conductivity data, *e.g.,* in the form of a lookup table having a plurality of entries each including a type of modeling material and a thermal conductivity value corresponding to the type of the modeling material of the entry. Controller **216** can then search the thermal conductivity data, extract the thermal conductivity value that correspond to the type of the modeling material received via input **214,** and control the duration over which systems **210** and **212** operate based on the thermal conductivity value. Medium **220** can contain another lookup table that associates thermal conductivity with duration, and controller **216** can select the proper duration by searching this lookup table. Alternatively, medium **220** can contain a lookup table that associates the type of modeling material with the duration, in which case controller **216** can select the duration based on the type of modeling material without determining the thermal conductivity. Still alternatively, the set of fabrication parameters received via input **214** can already include the thermal conductivity value, in which case computerized controller **216** can use a lookup table that associates thermal conductivity with duration, to determine the proper duration without determining the type of modeling material.

When the set of fabrication parameters comprises a geometrical parameter describing the object, controller **216** selects the duration of the exposure based on the geometrical parameter. This is optionally and preferably done using the information in medium **216.** For example, medium **220** can contain a lookup table having a plurality of entries each including geometrical information and a duration value corresponding to the geometrical information of the entry. The lookup table can include a different geometrical parameter per entry or a different set of geometrical parameters per entry. For example, the lookup table can include a first plurality of entries pertaining to different shapes, a second plurality of entries pertaining to different volumes, a third plurality of entries pertaining to different thicknesses, etc., or, alternatively, the lookup table can include a plurality of entries each pertaining to a different combination of shape, volume and thickness.

The set of fabrication parameters can also comprise the type and/or concentration of photoinitiator used in the fabrication. In this case, controller **216** can control the duration over which systems **210** and **212** operate based on the type and/or concentration of photoinitiator. Medium **220** can contain a lookup table that associates type and/or concentration of the photoinitiator with duration, and controller **216** can select the proper duration by searching this lookup table.

For example, in a preferred embodiment, an *a priori* collection of possible fabrication scenarios is used for defining the lookup table in medium **220,** so that each entry corresponds to one fabrication scenario and associates this fabrication scenario to a set of parameters for the photobleaching process. For example, an entry in the lookup table can include a set of fabrication parameters selected from the group consisting of type of modeling material, geometry, HDT, thermal conductivity, and a corresponding set of parameters for the photobleaching process (*e.g.*, temperature, duration).

The terms "comprises", "comprising", "includes", "including", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention.

Various embodiments and aspects of the present invention as delineated hereinabove and as claimed in the claims section below find experimental support in the following examples.

EXAMPLES

Reference is now made to the following examples, which together with the above descriptions illustrate some embodiments of the invention in a non-limiting fashion.

A comparative study was performed to investigate the ability of the photobleaching process of the present embodiment to bleach an object fabricated by AM. In all experiments, the object was manufactured from a newly designed transparent formulation which comprises a thioether material, as described in co-filed, PCT Application entitled "ADDITIVE MANUFACTURING OF THREE-DIMENSIONAL OBJECTS CONTAINING A TRANSPARENT MATERIAL" (Attorney Docket No. 89343), which claims the benefit of priority of U.S. Provisional Patent Application No. 63/094,801, by the present assignee, which included for example TPO as the photoinitiator, at concentration of 0.8%, and which was characterized by HDT estimated at 45°C-48°C.

In one experiment, objects 40 mm × 40 mm in lateral dimension and 5 mm in height, were fabricated by 3D inkjet printing, and were placed in various storage conditions for at least 24 hours. The objects were fabricated together with other objects, 15 mm in height (which were not used in this experiment) so as to expose the 5 mm height objects to excessive amount of UV light (until the 15 mm objects were completed). Four storage conditions were tested: (i) white light (white lamp 45W and light temperature of 6500K) and room temperature (about 25 °C), (ii) blue light and temperature of 45 °C, (iii) temperature of 45 °C in dark conditions, and (iv) room conditions and white fluorescent lamp. For each storage condition, the YI was calculated as a function of the storage time. The YI was calculated as follows.

Images of a pair of printed parts, were captured using a digital camera (Canon, PowerShot A650 IS). The images were then analyzed using ImageJ, and RGB values were extracted. The yellow index was calculated according to the formula

$$\text{Yellow Index} = 100 - Blue/[(Blue+Red+Green)/3]*100,$$

where Blue, Red and Green are the intensities of the respective colors, as obtained by image processing.

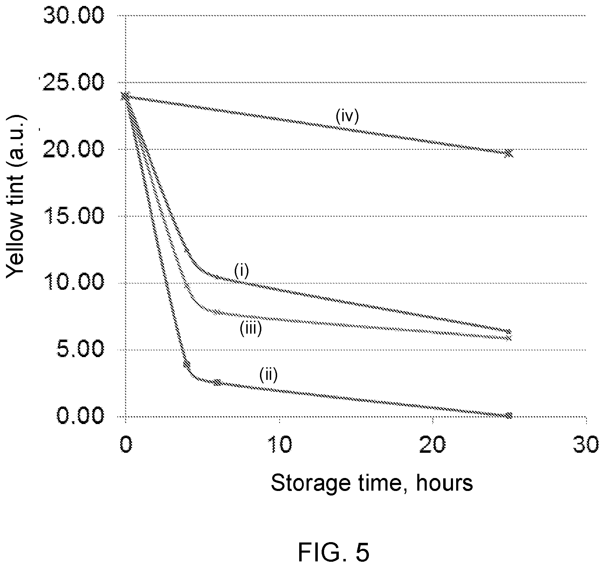

The results are shown in FIG. 5. As shown, the fastest reduction in YI was for storage condition (ii).

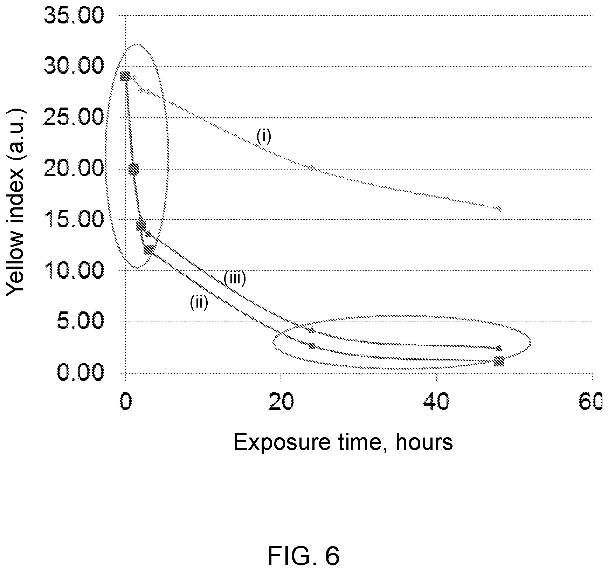

In another experiment, objects, 10 mm in height and 40 mm × 40 mm in lateral dimensions, were fabricated by 3D inkjet printing, and were exposed to light in different lighting scenarios. Three lighting scenarios were tested: (i) fluorescent white light in the laboratory, (ii) white light illumination in an illumination chamber maintained at 40 °C, and (iii) illumination using a white lamp 45W and light temperature of 6500K on a table maintained at a temperature of 40°C. For each scenario, the YI was calculated as a function of the illumination time, as done for the previous experiment. The results are shown in FIG. 6. As shown, the fastest reduction in YI was for illumination scenario (ii).

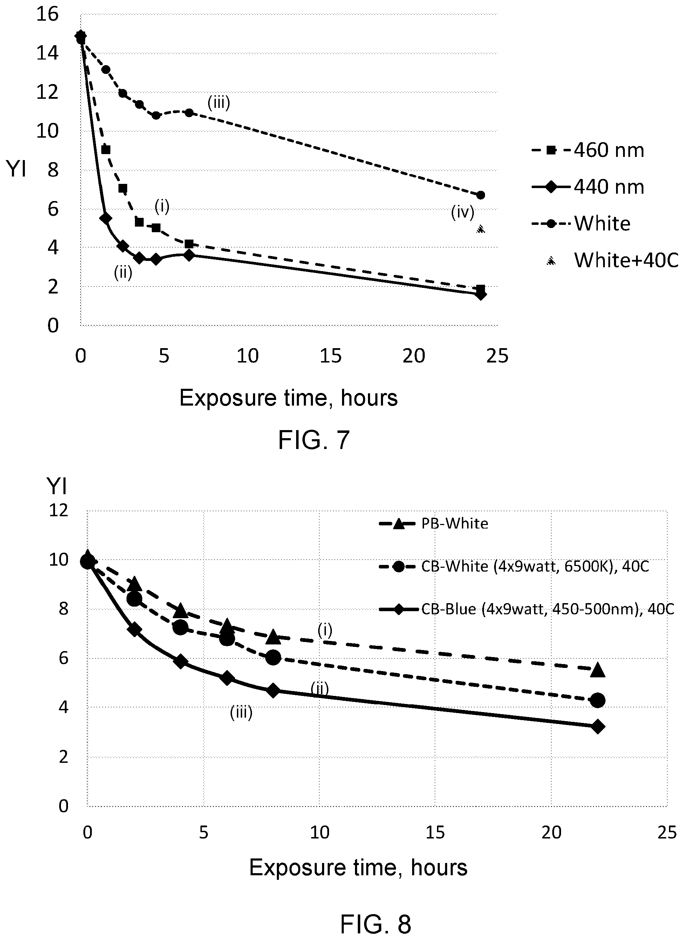

In an additional experiment, the effect of the light spectrum was investigated. Objects, 10 mm in height and 40 mm ×40 mm in lateral dimensions, were fabricated by 3D inkjet printing, and were exposed to light at different spectra. Four lighting scenarios were tested: (i) light having a peak wavelength of 460 nm at room temperature (25 °C), (ii) light having a peak wavelength of 440 nm at room temperature (25 °C), (iii) white flood lamp (100W, light temperature - 6500K) at room temperature (25 °C), and (iv) white flood lamp (100W, light temperature - 6500K) at temperature of 40 °C]. For each scenario, the YI was measured using a benchtop spectrophotometer (CI76600), according to ASTM E-313, as a function of the illumination time. The results are shown in FIG. 7. As shown, the fastest reduction in YI was for illumination scenario (ii). FIG. 7 does not contain a trend line since in lighting scenario (iv), a single measurement was taken at end of the experiment.

Table 1, below summarizes results of an experiment in which ten objects, 1 mm in height and 40mm×40mm in lateral dimensions, which were fabricated by 3D inkjet printing, were exposed to a photobleaching process at room temperature and white light generated by a flood lamp 100 W LED 6500K system. Shown in Table 1 are the colors of each of the objects, before treatment, and after 1 hour and 6 hours of exposure to the light. The colors are expressed in the CIE (L*, a*, b*) color space. Also shown is the color difference ΔE relative to the color before treatment. Table 1 demonstrates that use of white light for photobleaching results in a significant change in color for many of the samples after 6 hours of treatment.

Table 1

| | | before | | | after 1 hr photobleaching | | | | after 6 hr photobleaching | | | |
|---|---|---|---|---|---|---|---|---|---|---|---|---|
| # | L | a | b | L | a | b | **ΔE** | L | a | b | **ΔE** |
| 1 | 82.5 | -2.29 | -5.73 | 82.7 | -2.32 | -6.17 | **0.48** | 85.8 | -1.64 | -4.74 | **3.43** |
| 2 | 70.0 | -4.51 | -4.53 | 70.2 | -4.58 | -4.67 | **0.20** | 71.6 | -4.58 | -3.89 | **1.70** |
| 3 | 48.4 | -4.2 | -6.63 | 48.3 | -4.19 | -6.84 | **0.21** | 48.7 | -4.33 | -6.98 | **0.49** |
| 4 | 29.6 | -2.93 | -2.92 | 29.9 | -2.91 | -3.07 | **0.35** | 29.7 | -3.1 | -3.22 | **0.36** |
| 5 | 70.6 | -1.4 | 2.14 | 70.8 | -1.42 | 2.2 | **0.21** | 72.3 | -0.95 | 3.05 | **1.92** |
| 6 | 83.5 | -3.83 | -4.27 | 83.8 | -3.79 | -4.68 | **0.48** | 87.0 | -3.6 | -3.29 | **3.61** |
| 7 | 79.7 | -1.84 | -6.43 | 80.1 | -1.75 | -6.78 | **0.54** | 82.6 | -1.24 | -5.87 | **3.01** |
| 8 | 59.3 | -4.99 | -5.93 | 59.4 | -4.9 | -6.07 | **0.22** | 60.2 | -5.06 | -5.67 | **0.92** |
| 9 | 36.1 | -3.78 | -5.92 | 36.4 | -3.8 | -5.97 | **0.28** | 36.5 | -3.03 | -6.2 | **0.88** |
| 10 | 76.7 | -1.68 | 0.9 | 77.3 | -1.7 | 0.89 | **0.60** | 79.1 | -0.75 | 2.62 | **3.15** |

Table 2, below summarizes results of an experiment which is similar to the experiment summarized in Table 1, except that a higher dose of 460 nm LED light was used (100 W in this experiment).

Table 2

| | | before | | | after 1 hr photobleaching | | | | after 6 hr photobleaching | | | |
|---|---|---|---|---|---|---|---|---|---|---|---|---|
| # | L | a | b | L | a | b | **ΔE** | L | a | b | **ΔE** |
| 1 | 83.5 | -2.07 | -5.21 | 85.3 | -1.75 | -6.45 | **2.19** | 88.1 | -1.04 | -5.99 | **4.77** |
| 2 | 70.1 | -4.47 | -4.03 | 71.4 | -4.32 | -4.65 | **1.45** | 72.6 | -3 | -7.19 | **4.29** |
| 3 | 48.4 | -4.45 | -6.46 | 49.3 | -4.26 | -7.38 | **1.28** | 49.6 | -2.52 | -11.29 | **5.34** |
| 4 | 29.7 | -3.65 | -2.57 | 30.8 | -4.01 | -3.11 | **1.22** | 30.9 | -3.73 | -4.97 | **2.66** |
| 5 | 70.4 | -0.82 | 2.61 | 71.6 | -0.31 | 2.43 | **1.33** | 73.0 | 1.32 | 0 | **4.27** |
| 6 | 84.1 | -3.69 | -3.95 | 85.7 | -3.61 | -4.92 | **1.92** | 90.3 | -3.06 | -3.31 | **6.26** |
| 7 | 79.7 | -1.76 | -6.31 | 81.9 | -1.38 | -7.22 | **2.35** | 84.7 | 0.06 | -6.52 | **5.33** |
| 8 | 59.0 | -4.82 | -6.3 | 60.1 | -4.53 | -7.33 | **1.49** | 60.6 | -2.77 | -11.68 | **5.96** |
| 9 | 36.0 | -3.5 | -6.06 | 36.8 | -3.4 | -6.95 | **1.22** | 37.2 | -2.14 | -9.98 | **4.33** |

(continued)

| # | before | | | after 1 hr photobleaching | | | | after 6 hr photobleaching | | | |
|---|---|---|---|---|---|---|---|---|---|---|---|
| | L | a | b | L | a | b | ΔE | L | a | b | ΔE |
| 10 | 76.9 | -1.42 | 1.24 | 78.9 | -0.9 | 1.35 | **2.11** | 81.5 | 1.38 | 0.28 | **5.49** |

Table 2 demonstrates that a high dose of 460 nm LED light also results in a significant change in color after 6 hours of treatment.

FIG. 8 shows the reduction in YI for (i) photobleaching at room temperature and a flood lamp 100W white light, (ii) photobleaching at a temperature of 40 °C and white LED light using four 9W 6500 K LEDs, and (iii) photobleaching at a temperature of 40 °C and blue LED light using four 9W LEDs emitting light with peak wavelength between 450 nm and 500 nm. As shown, the highest change in YI was for photobleaching process (iii). Tables 3 and 4 below summarize the color changes for photobleaching processes (iii) and (i), respectively, for ten objects, 1 mm in height and 40mm×40mm in lateral dimensions, which were fabricated by 3D inkjet printing.

Tables 3 and 4, and FIG. 8 demonstrate that photobleaching process (iii) successfully achieves significant reduction of the YI, while maintaining a small change in the colors of the object (Table 3). In comparison, photobleaching process (i) also maintains a small change in the colors of the object (Table 4), but is less adequate for reducing the YI.

Table 3

| # | before photobleaching | | | after 22 hr photobleaching | | | |
|---|---|---|---|---|---|---|---|
| | L | a | b | L | a | b | ΔE |
| 1 | 84.03 | -0.14 | 0.2 | 85.02 | 0.02 | -1.23 | **1.75** |
| 2 | 29.22 | -1.87 | -2.02 | 29.27 | -1.86 | -2.36 | **0.34** |
| 3 | 29.54 | -0.84 | -0.72 | 29.81 | -0.74 | -1.03 | **0.42** |
| 4 | 33.26 | -1.09 | 1.05 | 33.71 | -0.8 | 0.65 | **0.67** |
| 5 | 39.42 | -0.13 | 1.63 | 39.68 | 0.31 | 1.02 | **0.80** |
| 6 | 40.35 | -0.58 | -2.59 | 40.59 | -0.29 | -3.07 | **0.61** |
| 7 | 74.27 | -0.45 | 9.58 | 74.59 | 0.41 | 8.31 | **1.57** |
| 8 | 63.6 | -1.6 | 3.08 | 64.01 | -1.03 | 1.92 | **1.36** |
| 9 | 68.83 | -1.36 | 12.56 | 69.21 | -0.33 | 10.83 | **2.05** |
| 10 | 71.78 | -2.21 | 2.46 | 72.28 | -1.52 | 0.87 | **1.80** |
| 11 | 71.48 | 1.23 | 6.16 | 71.74 | 1.71 | 5.55 | **0.82** |
| 12 | 77.5 | -3.04 | -0.11 | 78.88 | -2.9 | -2.7 | **2.94** |
| 13 | 45.82 | -25.77 | -32.23 | 47.07 | -23.44 | -36.14 | **4.72** |
| 14 | 39.49 | 48.74 | 8.06 | 40.33 | 50.04 | 6.31 | **2.34** |
| 15 | 70.78 | -0.02 | 76.34 | 72.2 | 0.22 | 78.81 | **2.86** |

Table 4

| # | before photobleaching | | | after 22 hr photobleaching | | | |
|---|---|---|---|---|---|---|---|
| | L | a | b | L | a | b | ΔE |
| 1 | 83.57 | 0.26 | -0.92 | 85.28 | 0.14 | -0.35 | **1.81** |
| 2 | 29.24 | -1.75 | -2.25 | 29.23 | -1.99 | -2.3 | **0.25** |
| 3 | 28.08 | -0.95 | -0.92 | 29.67 | -0.78 | -0.84 | **1.60** |
| 4 | 33.05 | -0.97 | 0.94 | 33.49 | -0.91 | 0.77 | **0.48** |
| 5 | 39.57 | 0.08 | 1.88 | 39.46 | 0.21 | 1.64 | **0.29** |
| 6 | 40.46 | -0.59 | -2.68 | 40.54 | -0.41 | -3.16 | **0.52** |

(continued)

| | before photobleaching | | | after 22 hr photobleaching | | | |
|---|---|---|---|---|---|---|---|
| # | L | a | b | L | a | b | ΔE |
| 7 | 74.26 | -0.62 | 9.9 | 74.61 | -0.03 | 9.66 | **0.73** |
| 8 | 63.81 | -1.03 | 3.26 | 64.11 | -1.33 | 2.94 | **0.53** |
| 9 | 68.23 | 0.41 | 10.4 | 69.38 | -0.55 | 11.88 | **2.11** |
| 10 | 71.91 | -2.15 | 2.17 | 72.44 | -1.92 | 2.22 | **0.58** |
| 11 | 71.24 | 1.79 | 5.09 | 71.56 | 1.8 | 5.76 | **0.74** |
| 12 | 77.64 | -2.88 | -0.03 | 79.1 | -2.89 | -2.03 | **2.48** |
| 13 | 46.22 | -26.08 | -31.68 | 46.95 | -24.36 | -35.73 | **4.46** |
| 14 | 40.23 | 49.05 | 9.38 | 40.2 | 50.06 | 7.01 | **2.58** |
| 15 | 71.35 | 0.22 | 76.59 | 72.21 | -0.47 | 78.77 | **2.44** |

The effect of the photobleaching process on the mechanical properties of the object was also studied. The results for exposure duration of 24 hours are summarized in Table 5, below, demonstrating improved mechanical properties after applying a photobleaching processes (i)-(iii) as described in FIG. 8.

By "flexural strength" or "flexural stress" ("or Flex., Stress") it is meant the stress in a material just before it yields in a flexure test. Flexural strength may be determined, for example, according to ASTM D-790-03.

By "flexural modulus" or "flex. Y. Modulus" it is meant the ratio of stress to strain in flexural deformation, which is determined from the slope of a stress-strain curve produced by a flexural test such as the ASTM D790. Flexural modulus may be determined, for example, according to ASTM D-790-04.

Table 5

| | White Flood lamp 100W (6500K), Room Temp **Process (i)** | White LED strips (4x9W), 6500K 40C **Process (ii)** | Blue LED strips (450-500nm 4x9W), 40C **Process (iii)** |
|---|---|---|---|
| Flex., Y. Modulus (MPa) | 1287 ± 23 | 1294 ± 42 | 1440 ± 91 |
| Flex., Stress (MPa) | 45.2 ± 0.1 | 45 ± 0.5 | 51.6 ± 1 |
| HDT (°C) | 45.5 ± 0.2 | 46.4 ± 0.1 | 45.9 ± 0.04 |

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

**Claims**

1.   A method of treating an object fabricated from a modeling material by additive manufacturing, comprising:

   receiving as input one or more fabrication parameters of the object, said fabrication parameters comprise a heat deflection temperature HDT of the modeling material;
   based on said input, selecting a photobleaching process temperature which is less than said HDT by at most 5 °C; and
   exposing the object to visible light having a peak wavelength less than 470 nm, and to said selected temperature.

2.   The method according to claim 1, wherein the object is fabricated from a plurality of modeling material formulations, and wherein said HDT is a smallest HDT among a respective plurality of HDT values of said plurality of modeling material formulations.

3.   The method according to claim 1 or 2, wherein a duration of said exposure is selected such as to reduce a yellowness index of the modeling material by at least 5 units on a CIE XYZ color space.

4. The method according to any one of claims 1-3, wherein said peak wavelength and temperature are selected such that for at least one colored region of the object a color difference between a color of said colored region after said exposure and a color of said colored region before said exposure is less than 2 $\Delta E^*$ units.

5. The method according to any one of claims 1-4, wherein the modeling material is obtained upon hardening a photocurable modeling material formulation that comprises a photoinitiator that undergoes photobleaching at said peak wavelength and/or upon hardening a photocurable modeling material formulation that comprises a phosphine oxide-type photoinitiator.

6. The method according to claim 5, wherein said photoinitiator that undergoes photobleaching at said peak wavelength is selected from a phosphine oxide type photoinitiator and a germanium-based photoinitiator, preferably an acyl germane type photoinitiator.

7. The method according to claim 5 or 6, wherein said phosphine oxide-type photoinitiator is a mono-acylated (MAPO) or bis-acylated phosphine oxide-type (BAPO) photoinitiator.

8. The method according to any one of claims 5-7, wherein said phosphine oxide-type photoinitiator is capable of free-radical initiation when irradiated at wavelength ranges of from about 380 nm to about 450 nm.

9. The method according to any one of claims 5-8, wherein said photoinitiator is selected from (2,4,6-trimethylbenzoyl)-diphenylphosphine oxide (TPO), bis(2,4,6-trimethylbenzoyl)phenyl phosphine oxide, bis(2,6-dimethoxybenzoyl)-(2,4,4-trimethylpentyl) phosphine oxide, a 25:75 mixture, by weight, of bis(2,6-dimethoxybenzoyl)-2,4,4-trimethylpentyl phosphine oxide and 2-hydroxy-2-methyl-1-phenylpropan-1-one, a 1:1 mixture, by weight, of bis(2,4,6-trimethylbenzoyl)phenyl phosphine oxide and 2-hydroxy-2-methyl-1-phenylpropane-1-one, and ethyl 2,4,6-trimethylbenzylphenyl phosphinate.

10. The method according to any one of claims 5-8, wherein said photoinitiator is or comprises bis(2,4,6-trimethylbenzoyl) phenyl phosphine oxide.

11. The method according to any one of claims 1-10, wherein at least a portion of the object comprises a transparent modeling material.

12. The method according to any one of claims 1-11, comprising receiving from an additive manufacturing system a set of fabrication parameters corresponding to a fabrication of the object, and automatically selecting said temperature and a duration of said exposure based on said parameters, said set of parameters comprising at least one of: the modeling material, a shape of the object, an amount of the modeling material in the object, a type of photoinitiator in the modeling material, and a concentration of said photoinitiator.

13. A system for treating an object fabricated from a modeling material by an additive manufacturing system, the system comprising:

   a treatment chamber for receiving the object;
   an illumination system for generating visible light having a peak wavelength less than 470 nm;
   a heating system for heating said chamber;
   an input for receiving a set of fabrication parameters corresponding to a fabrication of the object; and
   computerized controller for receiving said set of fabrication parameters from said input, and for operating said illumination system and said heating system based on said set of fabrication parameters,
   **characterised in that** said set of fabrication parameters comprises a heat deflection temperature HDT value of the modeling material, and wherein said computerized controller is configured to control said heating system to maintain in said chamber a temperature at most 5 °C less than said HDT value.

14. The system according to claim 13, wherein the object is fabricated from a plurality of modeling material formulations, and wherein said HDT value is a smallest HDT value among a respective plurality of HDT values of said plurality of modeling material formulations.

15. The system according to claim 13 or 14, wherein said input comprises a communication system configured for communicating with the additive manufacturing system to automatically receive said set of fabrication parameters therefrom.

## Patentansprüche

1. Ein Verfahren zur Behandlung eines durch generative Fertigung aus einem Modelliermaterial hergestellten Gegenstands, das Folgendes umfasst:

    Empfangen, als Eingabe, eines oder mehrerer Herstellungsparameter des Gegenstands, wobei die genannten Herstellungsparameter eine Wärmeformbeständigkeitstemperatur HDT des Modelliermaterials umfassen; basierend auf der genannten Eingabe, Auswählen einer Photobleichungs-Prozesstemperatur, die höchstens 5°C weniger als die genannte HDT beträgt; und Aussetzen des Gegenstands gegenüber sichtbarem Licht mit einer Peak-Wellenlänge von weniger als 470 nm und gegenüber der genannten ausgewählten Temperatur.

2. Verfahren nach Anspruch 1, wobei der Gegenstand aus einer Vielzahl von Modelliermaterialformulierungen hergestellt ist und wobei die genannte HDT eine kleinste HDT unter einer jeweiligen Vielzahl von HDT-Werten der genannten Vielzahl von Modelliermaterialformulierungen ist.

3. Verfahren nach Anspruch 1 oder 2, wobei eine Dauer des genannten Aussetzens so ausgewählt ist, dass ein Vergilbungsindex des Modelliermaterials um mindestens 5 Einheiten auf einem CIE-XYZ-Farbenraum reduziert wird.

4. Verfahren nach einem der Ansprüche 1-3, wobei die genannte Peak-Wellenlänge und Temperatur so ausgewählt sind, dass für mindestens eine farbige Region des Gegenstands eine Farbdifferenz zwischen einer Farbe der genannten farbigen Region nach dem genannten Aussetzen und eine Farbe der genannten farbigen Region vor dem genannten Aussetzen weniger als 2 $\Delta E^*$-Einheiten beträgt.

5. Verfahren nach einem der Ansprüche 1-4, wobei das Modelliermaterial nach dem Härten einer photohärtbaren Modelliermaterialformulierung, die einen Photoinitiator umfasst, der eine Photobleichung bei der genannten Peak-Wellenlänge durchläuft, und/oder nach dem Härten einer photohärtbaren Modelliermaterialformulierung, die einen Photoinitiator des Phosphinoxid-Typs umfasst, erhalten wird.

6. Verfahren nach Anspruch 5, wobei der genannte Photoinitiator, der eine Photobleichung bei der genannten Peak-Wellenlänge durchläuft, aus einem Photoinitiator des Phosphinoxid-Typs und einem germaniumbasierten Photoinitiator, bevorzugt einem Photoinitiator des Acylgerman-Typs, ausgewählt ist.

7. Verfahren nach Anspruch 5 oder 6, wobei der genannte Photoinitiator des Phosphinoxid-Typs ein monoacylierter Photoinitiator des Phosphinoxid-Typs (MAPO) oder bisacylierter Photoinitiator des Phosphinoxid-Typs (BAPO) ist.

8. Verfahren nach einem der Ansprüche 5-7, wobei der genannte Photoinitiator des Phosphinoxid-Typs zur Auslösung von freien Radikalen in der Lage ist, wenn er bei Wellenlängenbereichen von etwa 380 nm bis etwa 450 nm bestrahlt wird.

9. Verfahren nach einem der Ansprüche 5-8, wobei der genannte Photoinitiator aus Folgenden ausgewählt ist: (2,4,6-Trimethylbenzoyl)-diphenylphosphinoxid (TPO), Bis(2,4,6-trimethylbenzoyl)phenylphosphinoxid, Bis(2,6-dimethoxybenzoyl)-(2,4,4-trimethylpentyl)phosphinoxid, einer 25:75-Mischung, bezogen auf das Gewicht, von Bis(2,6-dimethoxybenzoyl)-2,4,4-trimethylpentylphosphinoxid und 2-Hydroxy-2-methyl-1-phenylpropan-1-on, einer 1:1-Mischung, bezogen auf das Gewicht, von Bis(2,4,6-trimethylbenzoyl)phenylphosphinoxid und 2-Hydroxy-2-methyl-1-phenylpropan-1-on, und Ethyl-2,4,6-trimethylbenzylphenylphosphinat.

10. Verfahren nach einem der Ansprüche 5-8, wobei der genannte Photoinitiator Bis(2,4,6-trimethylbenzoyl)phenylphosphinoxid ist oder umfasst.

11. Verfahren nach einem der Ansprüche 1-10, wobei mindestens ein Anteil des Gegenstands ein transparentes Modelliermaterial umfasst.

12. Verfahren nach einem der Ansprüche 1-11, das Folgendes umfasst: Empfangen, von einem generativen Fertigungssystem, eines Satzes von Herstellungsparametern, die einer Herstellung des Gegenstands entsprechen, und automatisches Auswählen der genannten Temperatur und einer Dauer des genannten Aussetzens, basierend auf den genannten Parametern, wobei der genannte Satz von Parametern mindestens eines der Folgenden umfasst: das Modelliermaterial, eine Gestalt des Gegenstands, eine Menge des Modelliermaterials in dem Gegenstand, einen Typ des Photoinitiators in dem Modelliermaterial und eine Konzentration des genannten Photoinitiators.

13. Ein System zur Behandlung eines durch ein generatives Fertigungssystem aus einem Modelliermaterial hergestellten Gegenstands, wobei das System Folgendes umfasst:

eine Behandlungskammer zum Empfangen des Gegenstands;
ein Beleuchtungssystem zum Erzeugen von sichtbarem Licht mit einer Peak-Wellenlänge von weniger als 470 nm;
ein Heizsystem zum Erwärmen der genannten Kammer;
eine Eingabe zum Empfangen eines Satzes von Herstellungsparametern, die einer Herstellung des Gegenstands entsprechen; und
eine computergestützte Steuerung zum Empfangen des genannten Satzes von Herstellungsparametern von der genannten Eingabe und zum Betreiben des genannten Beleuchtungssystems und genannten Heizsystems, basierend auf dem genannten Satz von Herstellungsparametern,
**dadurch gekennzeichnet, dass** der Satz von Herstellungsparametern einen Wärmeformbeständigkeitstemperaturwert (HDT-Wert) des Modelliermaterials umfasst, und wobei die genannte computergestützte Steuerung dazu ausgelegt ist, das genannte Heizsystem zu steuern, um in der genannten Kammer eine Temperatur von höchstens 5°C weniger als den genannten HDT-Wert aufrechtzuerhalten.

14. System nach Anspruch 13, wobei der Gegenstand aus einer Vielzahl von Modelliermaterialformulierungen hergestellt ist und wobei der genannte HDT-Wert ein kleinster HDT-Wert unter einer jeweiligen Vielzahl von HDT-Werten der genannten Vielzahl von Modelliermaterialformulierungen ist.

15. System nach Anspruch 13 oder 14, wobei die genannte Eingabe ein Kommunikationssystem umfasst, das zum Kommunizieren mit dem generativen Fertigungssystem ausgelegt ist, um von diesem den genannten Satz von Herstellungsparametern automatisch zu empfangen.

**Revendications**

1. Procédé de traitement d'un objet fabriqué à partir d'un matériau de modelage par fabrication additive, comprenant :

la réception comme entrée d'un ou plusieurs paramètres de fabrication de l'objet, lesdits paramètres de fabrication comprenant une température de déflexion thermique TDT du matériau de modelage ;
en fonction de ladite entrée, la sélection d'une température de procédé de photoblanchiment qui est inférieure à ladite TDT d'au maximum 5 °C ; et
l'exposition de l'objet à de la lumière visible ayant une longueur d'onde maximale inférieure à 470 nm, et à ladite température sélectionnée.

2. Procédé selon la revendication 1, dans lequel l'objet est fabriqué à partir d'une pluralité de formulations de matériaux de modelage, et dans lequel ladite TDT est une TDT la plus petite parmi une pluralité respective de valeurs de TDT de ladite pluralité de formulations de matériaux de modelage.

3. Procédé selon la revendication 1 ou 2, dans lequel une durée de ladite exposition est sélectionnée de manière à réduire un indice de jaunissement du matériau de modelage d'au moins 5 unités sur un espace colorimétrique CIE XYZ.

4. Procédé selon l'une quelconque des revendications 1 à 3, dans lequel ladite longueur d'onde maximale et la température sont sélectionnées de telle sorte que, pour au moins une région colorée de l'objet, une différence de couleur entre une couleur de ladite région colorée après ladite exposition et une couleur de ladite région colorée avant ladite exposition soit inférieure à 2 unités $\Delta E^*$.

5. Procédé selon l'une quelconque des revendications 1 à 4, dans lequel le matériau de modelage est obtenu lors du durcissement d'une formulation de matériau de modelage photodurcissable qui comprend un photoinitiateur qui subit un photoblanchiment à ladite longueur d'onde maximale et/ou lors du durcissement d'une formulation de matériau de modelage photodurcissable qui comprend un photoinitiateur de type oxyde de phosphine.

6. Procédé selon la revendication 5, dans lequel ledit photoinitiateur qui subit un photoblanchiment à ladite longueur d'onde maximale est sélectionné parmi un photoinitiateur de type oxyde de phosphine et un photoinitiateur à base de germanium, de préférence un photoinitiateur de type acylgermane.

7. Procédé selon la revendication 5 ou 6, dans lequel ledit photoinitiateur de type oxyde de phosphine est un photoinitiateur mono-acylé (MAPO) ou bis-acylé (BAPO) de type oxyde de phosphine.

8. Procédé selon l'une quelconque des revendications 5 à 7, dans lequel ledit photoinitiateur de type oxyde de phosphine est capable d'initiation radicalaire lorsqu'il est irradié à des gammes de longueurs d'onde d'environ 380 nm à environ 450 nm.

9. Procédé selon l'une quelconque des revendications 5 à 8, dans lequel ledit photoinitiateur est sélectionné parmi l'oxyde de (2,4,6-triméthylbenzoyl)-diphénylphosphine (TPO), l'oxyde de bis(2,4,6-triméthylbenzoyl)phénylphosphine, l'oxyde de bis(2,6-diméthoxybenzoyl)-(2,4,4-triméthylpentyl)phosphine, un mélange 25:75, en poids, d'oxyde de bis(2,6-diméthoxybenzoyl)-2,4,4-triméthylpentylphosphine et de 2-hydroxy-2-méthyl-1-phénylpropan-1-one, un mélange 1:1, en poids, d'oxyde de bis(2,4,6-triméthylbenzoyl)phénylphosphine et de 2-hydroxy-2-méthyl-1-phénylpropane-1-one, et le 2,4,6-triméthylbenzylphénylphosphinate d'éthyle.

10. Procédé selon l'une quelconque des revendications 5 à 8, dans lequel ledit photoinitiateur est ou comprend de l'oxyde de bis(2,4,6-triméthylbenzoyl)phénylphosphine.

11. Procédé selon l'une quelconque des revendications 1 à 10, dans lequel au moins une partie de l'objet comprend un matériau de modelage transparent.

12. Procédé selon l'une quelconque des revendications 1 à 11, comprenant la réception, à partir d'un système de fabrication additive, d'un ensemble de paramètres de fabrication correspondant à une fabrication de l'objet, et la sélection automatique de ladite température et d'une durée de ladite exposition en fonction desdits paramètres, ledit ensemble de paramètres comprenant au moins l'un de : le matériau de modelage, une forme de l'objet, une quantité du matériau de modelage dans l'objet, un type de photoinitiateur dans le matériau de modelage, et une concentration dudit photoinitiateur.

13. Système de traitement d'un objet fabriqué à partir d'un matériau de modelage par un système de fabrication additive, le système comprenant :

une chambre de traitement pour recevoir l'objet ;
un système d'éclairage pour générer de la lumière visible ayant une longueur d'onde maximale inférieure à 470 nm ;
un système de chauffage pour chauffer ladite chambre ;
une entrée pour recevoir un ensemble de paramètres de fabrication correspondant à une fabrication de l'objet ; et
un dispositif de commande informatisé pour recevoir ledit ensemble de paramètres de fabrication à partir de ladite entrée, et pour faire fonctionner ledit système d'éclairage et ledit système de chauffage en fonction dudit ensemble de paramètres de fabrication,
**caractérisé en ce que** ledit ensemble de paramètres de fabrication comprend une valeur TDT de température de déflexion thermique du matériau de modelage, et dans lequel ledit dispositif de commande informatisé est configuré pour commander ledit système de chauffage afin de maintenir dans ladite chambre une température inférieure d'au maximum 5 °C à ladite valeur TDT.

14. Système selon la revendication 13, dans lequel l'objet est fabriqué à partir d'une pluralité de formulations de matériaux de modelage, et dans lequel ladite valeur TDT est une valeur TDT la plus petite parmi une pluralité respective de valeurs TDT de ladite pluralité de formulations de matériaux de modelage.

15. Système selon la revendication 13 ou 14, dans lequel ladite entrée comprend un système de communication configuré pour communiquer avec le système de fabrication additive afin de recevoir automatiquement ledit ensemble de paramètres de fabrication à partir de celui-ci.

FIG. 1A

FIG. 1B

FIG. 1C

FIG. 1D

FIG. 2A

FIG. 2B

FIG. 2C

FIG. 3A

FIG. 3B

FIG. 4

FIG. 5

FIG. 6

FIG. 7

FIG. 8

FIG. 9A

FIG. 9B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63094712
- US 63094801
- US 6259979 B
- US 6569373 B
- US 6658314 B
- US 6850334 B
- US 6863859 B
- US 7183335 B
- US 7209797 B
- US 7225045 B
- US 7300619 B
- US 7500846 B
- US 9031680 B
- US 9227365 B
- US 20060054039 A
- WO 2016009426 A
- WO 2014007399 A2
- WO 2020065654 A
- IL 2020050396 W

**Non-patent literature cited in the description**

- *CHEMICAL ABSTRACTS*, 75980-60-8
- *CHEMICAL ABSTRACTS*, 162881-26-7